Europäisches Patentamt

European Patent Office

Office européen des brevets

(11) Veröffentlichungsnummer: **0 375 667**
**A2**

(12) **EUROPÄISCHE PATENTANMELDUNG**

(21) Anmeldenummer: 90103815.8

(22) Anmeldetag: 16.04.85

(51) Int. Cl.⁵: **B65G 21/04**

Diese Anmeldung is am 27 - 02 - 1990 als Teilanmeldung zu der unter INID-Kode 60 erwähnten Anmeldung eingereicht worden.

(30) Priorität: 12.05.84 EP 84105404
18.10.84 DE 3438122

(43) Veröffentlichungstag der Anmeldung:
27.06.90 Patentblatt 90/26

(60) Veröffentlichungsnummer der früheren Anmeldung nach Art. 76 EPÜ: **0 181 359**

(84) Benannte Vertragsstaaten:
**AT BE CH DE FR GB IT LI LU NL SE**

(71) Anmelder: **Schröder**
**Maschinen-Handels-GmbH & Co. KG**
**Hauptstr. 11**
**D-3579 Frielendorf(DE)**

(72) Erfinder: **Der Erfinder hat auf seine Nennung verzichtet**

(74) Vertreter: **Jahn-Held, Wilhelm W. Dr.Dr.-Ing.**
**Dipl.-Chem.**
**Schöne Aussicht 8**
**D-3513 Staufenberg-Landwehrhagen(DE)**

(54) **Förderanlage aus Sektionen sowie Fördereinrichtungen.**

(57) Fördereinrichtung gekennzeichnet dadurch, dass an Masten mit Seilabspannung ein Drahtseil als Tragseil mit Selbstbefestigung verankert ist und auf diesem die Spurrollen mit den Wellen laufen und an denen die Gehängerahmen, die Fördereinrichtungen mit Tragrollen, mit Achsen und mit Fördergurt und die Unterrollen mit Achsen und mit Untertrümern des Fördergurtes hängen, und der Antrieb durch einen Trommelmotor oder über die Antriebstrommel erfolgt, und der Fördergurt über Leitrollen auf der Untergurtrolle geführt ist, und eine Winde die Zugseile mit oberem und unterem Strang über die Spurscheibe anzieht und das untere Zugseil mit dem oberen Strang an den Befestigungspunkten mit den Gehängerahmen am unteren Rand verbunden ist, und durch diese Kombination von Fördereinrichtung und Tragseil unterschiedliche Förderlängen einstellbar sind unter Vermeidung aufwendiger Stahlkonstruktionen.

Figur 1

Xerox Copy Centre

## Förderanlagen aus Sektionen von Tragkonstruktionen und Fördereinrichtungen zur optimalen und einfachen Umstellung des Förderortes, des Förderweges, zur Änderung der Stützweiten bei hoher Stabilität, zur konstruktiven Anpassung an Veränderungen der zu transportierenden Stoffe und Güter aller Art unter Verwendung standartisierter Einzelelemente als Bauteile

Zur stetigen Förderung von Gütern aller Art, wie Schüttgüter, verpackte Güter, für Gewerbe-, Industrie- und Handels-Betriebe, sowie in der Produktion, zum Transport und zur Betriebsrationalisierung werden Tragkonstruktionen mit Fördereinrichtungen im steigenden Umfang benötigt.

Der Einsatz von Tragkonstruktionen mit Fördereinrichtungen, insbesonder für die Förderung von Massengütern, führt zu einer besseren Mechanisierung der Förderung durch die Schaffung von Verbindungen bei der Produktion, bei der Aufbereitung, sowie in der Verfahrenstechnik.

Dieser Einsatz von Tragkonstruktionen mit Fördereinrichtungen fördert auch die Automatation und damit die Rationalisierung in Verbindung mit der Behandlung, der Lagerung, der Verpackung und der Verladung von Stoffen und Gütern.

Der Stand der Technik hat sich deshalb vielfach mit Fördereinrichtungen befasst. Stetigförderer haben an der Förderung einen erheblichen Anteil für Schüttgüter gebündelte und verpackte Güter.

Diese Stetigförderer fördern bei den verschiedensten Einsatzmöglichkeiten unter Schonung der Güter bei geringen Kosten und geringem Verschleiss, und diese sind deshalb besonders wirtschaftlich.

Dieser vielseitige Einsatz von Stetigförderern stellt hohe Anforderungen an die Konstruktion, an unterschiedliche Typen, insbesondere bei Änderungen oder Umstellungen der Förderwege, des Ablaufes von Produktionsprozessen, bei Änderungen der Handhabung der Stoffe und Güter.

Diese vielseitigen Anforderungen an Stetigförderer erfordern nach dem Stand der Technik schwierige und deshalb aufwendige Umstellungen und auch den Ersatz vorhandener Stetigförderer durch notwendige Neukonstruktionen zur Anpassung an solche Umstellungen und Änderungen bei der Verwendung der Stetigförderer.

Diese Kompliziertheit der Förderanlagen nach dem Stand der Technik beschränkt die Verwendungsmöglichkeit auf vorherbestimmte Branchen mit bestimmten Produkten.

Diese technischen und wirtschaftlichen Nachteile des Standes der Technik werden durch die Förderanlagen gemäss der Erfindung vermieden.

Gegenstand der Erfindung sind Förderanlagen aus Sektionen von Tragkonstruktionen und Fördereinrichtungen zur optimalen und einfachen Umstellung des Förderortes, des Förderweges, zur Änderung der Stützweiten bei hoher Stabilität, zur konstruktiven Anpassung an Veränderungen der zu transportierenden Stoffe und Güter aller Art unter Verwendung standartisierter Einzelelemente als Bauteile und die Ausbildung der Antriebsvorrichtung.

Es ist eine Aufgabe der Förderanlagen der Erfindung, eine stets optimale Förderung in der Produktion, bei der Lagerung, Handhabung, Verpackung und Verladung von Massengütern, wie auch von gebündelten oder verpackten Gütern zur ermöglichen.

Eine andere Aufgabe der Erfindung besteht darin, eine Verknüpfung der Förderung zwischen Gebäuden, sowie zwischen Maschinen und anderen, technischen Einheiten bei wechselnder Beanspruchung zu ermöglichen.

Eine weitere Aufgabe besteht darin, die Wiederverwendung von Stetigförderern an anderen Einsatzorten und Einsatzstellen zu ermöglichen und dabei weitgehend technische Änderungen zu vermeiden.

Es ist eine weitere Aufgabe der Fördereinrichtungen der Erfindung, rasch und unter Verwendung der vorhandenen Teile Stetigförderer einer jeweils veränderten Anforderung anzupassen, unter Kürzen, Verlängern oder Richtungsänderungen der Tragkonstruktionen und Fördereinrichtungen. Diese Änderungen und Umstellung werden als Aufgabe der Erfindung rasch und auf einfache Weise gelöst. Eine weitere Aufgaber der Erfindung besteht darin, eine Anpassung der Abstände der Stationen zu ermöglichen.

Diese Aufgaben der Erfindung werden im kennzeichnenden Teil der Patentansprüche 1 bis 4 als Gruppe von Erfindungen gelöst als Verwirklichung einer erfinderischen Idee.

Eine Lösung der Aufgabe der Erfindung ist dadurch gekennzeichnet, dass an Masten (289,292) mit Seilabspannung, oder an einem Gebäude oder im Boden ein Drahtseil (291) als Tragseil mit einer Seilbefestigung (290) verankert ist, und auf diesem die Spurrollen (293) mit den Wellen (294) laufen, und an denen die Gehängerahmen (295) , die Fördereinrichtungen mit Tragrollen (9), mit den Achsen (10) und mit dem Fördergurt (11), und die Untergurtrollen (12) mit den Achsen (13) und mit den Untertrümern (14) des Fördergurtes hängen, und der Antrieb durch einen Trommelmotor (296) oder über die Antriebstrommel (297) erfolgt, und der Fördergurt über die Leitrollen (299,300) auf der Untergurtrolle (12) geführt ist, und eine Winde (302) die Zugseile mit oberem und unterem Strang (303,304) über die Spurscheibe (305) anzieht und das untere Zugseil mit dem oberen Strang (311) an den Befestigungspunkten (306,a) mit allen Gehängerahmen am unteren Rand verbunden ist, und durch diese Kombination von Fördereinrichtung und Tragseil unterschiedliche Förderlängen einstellbar sind unter Vermeidung aufwendiger Stahlkonstruktionen.

Eine andere Lösung der Aufgabe der Erfindung ist dadurch gekennzeichnet, dass das Tragseil (291) sich zwischen zwei Aufhängepunkten, vorzugsweise zwischen Stahlträgern befindet, und die daran befestigte Gehängerahmen (295) mit zwei oder mehreren Spurrollen (293) in sich nach unten verjüngender Trapezform ausgebildet ist zur Erhöhung der Stabilität des Tragseiles und der Gehängerahmen in Längsrichtung und zur Aufnahme mehrerer Tragrollen (9) und Untergurtrollen (12), und der Gehängerahmen (295) durch die herausnehmbare Welle (294) austauschbar ist, und dieser durch den Steg (375) verstärkt ist, und grosse Spurkränze (378) das Abspringen von zwei oder mehreren Tragseilen (291) verhindern und ausserdem Regenabweiser (379) und Leitbleche (380) angeordnet sind, gegebenenfalls an den Hängerahmen (295) Netze (395) befestigt sind zur Aufnahme des Fördergurtes (11) und des Untertrums (14) beim Zusammenschieben des Gehängerahmens (295) für Wartungszwecke, oder in Gebäude als Wetterschutz.

Eine weitere Lösung der Aufgabe der Erfindung ist dadurch gekennzeichnet, dass auf dem Befestigungspunkt (292) ein oder mehrere Tragseile (291) schwenkbar oder am Drehkranz (335) gelagert sind, und das Tragseil (291) an seinem äusseren Ende ein Gegengewicht zur Spannung des Tragseiles trägt, das sich vorzugsweise auf einem oder mehreren Fahrwagen befindet, der sich auf einer kurvenförmigen, vorzugsweise einer kreisförmigen Strecke bis zu 360° bewegt, oder das Tragseil (291) an einem der beiden Befestigungspunkten auf eine Winde befestigt ist, und das Tragseil zwischen den beiden Befestigungspunkten fest oder einstellbar eine steigende oder fallende Neigung aufweist, oder beide Befestigungspunkte sich auf annähernd gleicher Höhe befinden, vorzugsweise die Neigung des Tragseiles 5° bis 10° beträgt zur Einsparung an Energie bei der Förderung, und die Fördereinrichtung im Gehängerahmen (295) an Spurrollen (263) auf dem Tragseil (291) von Winden (302,308) in beiden Richtungen gezogen wird, oder statt der oberen Winde (302) und anstelle der Spurrollen (293) sich das Laufseil (361) und das Zahnrad (363) und die Drahtseiltrommel (367) befinden, und die Gehängerahmen (295) dadurch sich selbstfahrend mit dem Zahnrad (363) auf Zahnschienen (360), oder mit dem Laufrad (361) auf Schienen (359) oder Tragseilen (291) bewegen, und die so angetriebenen Gehängerahmen (297) zur Abstützung des Gegenmomentes mit einem anderen Gehängerahmen (295) durch diagonale Verstrebungen (368) verbunden sind, und h in den Gehängerahmen (295) mehrere Fördereinrichtungen verschiedener Längen über-und/ oder nebeneinander befinden zum Abwerfen des Fördergutes an verschiedenen Stellen, oder auf den Fördereinrichtungen an definierten Stellen mittels heb- und senkbaren Abstreifvorrichtungen das Fördergut abgestreift wird, und das Fördergut ausserhalb oder innerhalb des inneren Befestigungspunktes (292) hochgefördert und über Rutschen oder Vibrationsrinnen auf die Fördereinrichtung aufgegeben wird, die am Drehkranz (343) befestigt sind, und der Trog (340) mit dem Auslauf (344) über der Rinne (337) das Fördergut auf die Fördereinrichtungen unabhängig von der Richtung des Tragseiles (291) und unabhängig von der Zuführung in der Steilförderung (339) aufgibt, oder der drehbare Auslaufkopf (497) des Steilförderes (339) sich in Richtung des Tragseiles (291) mitdreht, und das Fördergut aufgibt, oder die Steilförderereinrichtung (339) in den Trog (343,a) fördert und von jeder Stelle des nach allen Seiten abfallenden Troges das Fördergut zur tiefsten Stelle (344) auf die Fördereinrichtung über die Rutsche (329) rutscht.

Eine weitere Lösung der Aufgabe der Erfindung ist dadurch gekennzeichnet, dass an dem oberen Punkt des drehbaren Pylon (463) mittels der Hauptspanndrahtseile (468,469) und der Drahtseile (470) ein oder mehrere Auslegen (464, 465) mit einer oder mehreren Fördereinrichtungen (466, 467) angehängt sind, und die Drahtseile (470) in die Löcher (471) der Scheiben (418) eingreifen, und an den Scheiben (418) die äusseren Rohre (417,a) und die inneren Rohre (417) angeschweisst sind, und die tragenden Konstruktionsrohre der Ausleger (464, 465) von beiden Seiten gegen die Scheiben (418) eingesteckt sind und durch Beanspruchung der Ausleger (464, 465) nur auf Zug, keine Befestigungen der eingesteckten Rohre erforderlich sind, und die Steilfördereinrichtung (339) mit dem drehbaren Pylon (463) verbunden ist und über die Fördereinrichtungen (326) und über die Tröge (476) mit Schneckenförderern das Produkt zugeführt wird und gegebenenfalls die Fördereinrichtungen (466, 467) durch hydraulische Stempel (487) an dem Pylon (463) angehoben oder gesenkt werden und dadurch eine Übergabe des Produktes an dieser Stelle erfolgt, und die Förderung über beide Ausleger (464, 465) über die ganze Länge erfolgt.

Die alternative and bevorzugte Ausgestaltung der Förderanlage der Erfindung ist in den Unteransprüchen definiert.

Die Lösungen der Aufgaben der Erfindung sind in den figürlichen Darstellungen erläutert.

Es werden in den Figuren dargestellt:

Figur 1 An einem Tragseil hängen die Gehängerahmen die die Fördereinrichtungen tragen, die von Winden in Arbeitsstellung und wieder zurück gefahren (gezogen) werden.

Figur 2 Querschnitte zu Figur 2.

Figur 3 Drei Tragseile tragen die Gehängerahmen an gesicherten Spurrollen. Regenabweiser lassen Wird durch.Leitbleche leiten die Produkte in verschiedene Boxen, Silos and auf Halden.Mehr als zwei Fördereinrichtungen hängen gleichzeitig in den Gehängerahmen.

Figur 4 Querschnitt zu Figur 4.

Figur 5 Draufsicht: Gelände mit Boxen, Silos and Schüttgelände (Halde, Deponie) hier von einer Förderanlage beschickt.

Figur 6 Ein Tragseil ist an einer Seite drehbar gelagert und an der anderen Seite mit einem Fahrwagen verbunden, der mit Gewichten (als Gegengewicht) belastet ist. Gehängerahmen mit Fördereinrichtungen werden mit Winden in Arbeitsstellung gezogen und mit dem Fahrwagen und mit der Länge der ausgezogenen Gehängerahmen, kann auf einem großen Platz (Deponie) genau die gewünschte Abwurfstelle für das Produkt angefahren werden und nach Wunsch geändert werden.

Figur 7 Fahrwagen im Querschnitt.

Figur 8 Fahrwagen mit Fahr-und Stützrädern und großen Ballastgewichten.

Figur 9 zeigt die Vorderansicht zu Figur 6

Figur 10 Förderanlagen, die den Förderbetrieb Förderanlagen, die den Förderbetrieb für die Halde (Deponie) nicht stören, bringen das zu fördernde Produkt in einen Mast oder in einem Gebäude nach oben, damit es die Fördereinrichtungen in den Gehängerahmen erreicht.

Figur 11 Die Tragseile sind an den Drehkränzen befestigt und ermöglichen so, dass ein,zwei und mehr Fahrwagen im Kreis,auch mit 360 Grad fahren.

Figur 12 Draufsicht zu Figur 13.

Figur 13 In einem Mast,innen hohl, werden die Produkte nach oben gefördert, in eine Rinne und von da in die Fördereinrichtungen an den Gehängerahmen laufen gelassen.

Figur 14 Höhenverstellung der Tragseile und damit variable Abwurfhöhen der Produkte.Mehrere Fördereinrichtungen in den gleichen Gehängerahmen. Zur Reparatur und außerhalb der Betriebszeit werden die Gehängerahmen in Gebäude oder unter Wetterschutz gezogen. Gehängerahmen mit Fördereinrichtungen werden wahlweise in die andere Richtung gezogen und fördern dann in diese Richtung. Regen/-Wetterschutz wird nicht eingequetscht, wenn die Gehängerahmen zusammen und in eine Richtung gezogen werden, weil Puffer einen notwendigen Abstand der Gehängerahmen sichern.

Figur 15 Querschnitt zu Figur 14.

Figur 16 Gehängerahmen mit Antrieb und Laufrädern für Schienen und Tragseile, zieht die anderen Gehängerahmen mit.Strom für diese Antriebe und für die Fördereinrichtungen wird über Kabel geleitet, die am Gehängerahmen hängen.Ebenso Kabel für Schalten und Steuern. Die Umlenktrommel wird zusätzlich angetrieben. Spnnung des Fördergurtes durch Hydraulik,Pneumatik, Elastomere oder Federn. Gleichzeitig und gleichmäßig ziehen die Antriebe im Gehängerahmen oben und die Winden mit Drahtseilen unten. Steuerung der Spannun der Fördergurte.

Figure 17 Querschnitt zu Figur 16 .

Figur 18 Antriebs-und Umlenktrommel und die Tragstationen sind in einem variablen Neigungsgrad angeordnet. Produkte rollen umsomehr ab, je runder sie sind. Ruckartige Impulse steigern die Sortierung. Schlitze in den Fördergurten, sorgen bei nassen Produkten für Entwässerung.

Figur 19 Querschnitt zu Figur 18.

Figur 20 Die Gehängerahmen haben mehr als eine Spurrolle und mehrere Tragrollen und Untergurtrollen. Dadurch mehr Stabilität und weniger Gehängerahmen bei gleichen Förderlänge.Gehängerahmen sind austauschbar und in der Zahl veränderlich.Spurrollensicherung.

Figur 21 Querschnitt zu Figur 20 .

Figur 22 Tragmaste für die Tragseile um die Förderlängen zu vergrößern und um Richtungsänderungen zu schaffen.

Figur 23 Jeweils zwei Tragmaste tragen die Tragseile für höhere Leistungen und für größere Stabilität.

Figur 24 Gleitschienen für die Sicherheit, damit die Gehängerahmen nicht an die Tragmaste stoßen.

Figur 25 Tragrollen bilden eine Mulde für den Fördergurt.

Figur 26 Tragrollen werden durch Hydraulik, Pneumatik oder Gewinde. spindeln waagerecht gelegt.Das ist die Voraussetzung um Produkte an beliebigen Stellen abwerfen zu können.

Figur 27 Eine Platte wird von unten gegen den Fördergurt gedrückt. Auf der so geschaffenen Ebene oder Neigungslage können Abstreifer die Produkte vom Fördergurt abstriefen.

Figur 28 Abstreifer.

Figur 96a: Bürsten, auch mit Motorantrieb streifen,kehren Produkte vom Fördergurt ab.

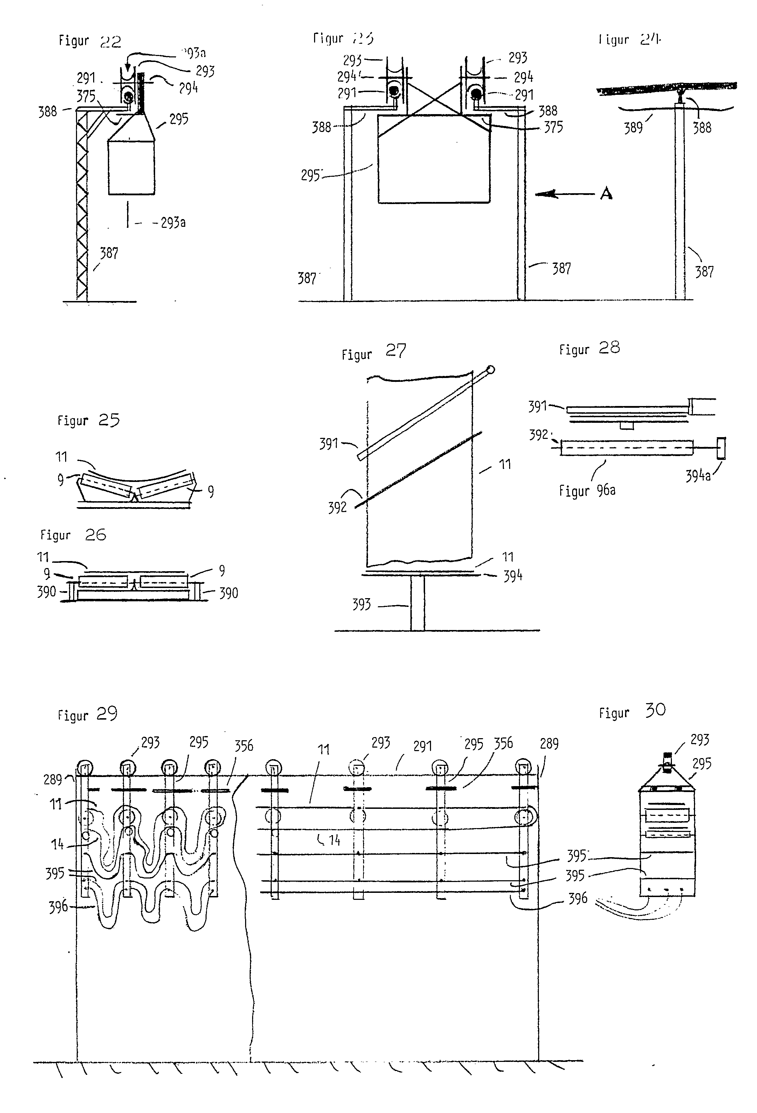

Figur 29 Netze oder Draht-oder Kunststoff-Seile nehmen die Fördergurte Kabel und Regen u.Wetterschutz-Einrichtungen auf, wenn die Gehängerahmen eng zusammengezogen werden.

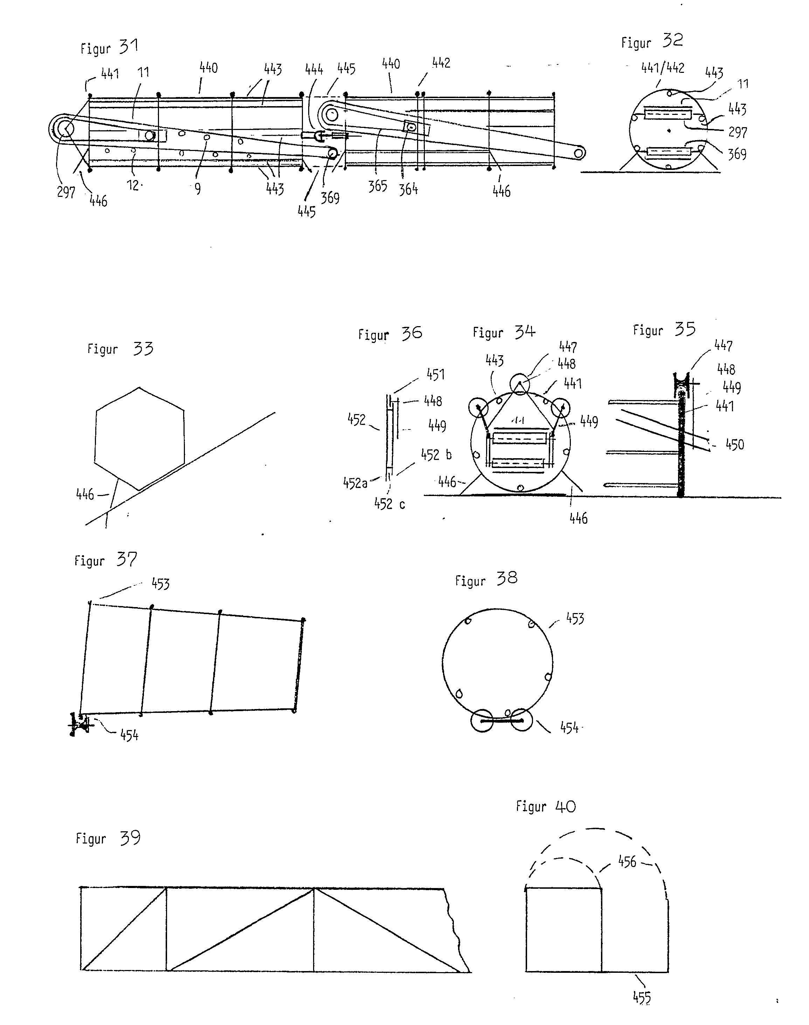

Figur 30 Querschnitt zu Figur 29.

Figur 31 Grosse Reifen aus Rohren oder Profilen sind einzeln oder in einer Art 'Rhönrad' mit Rohren oder Profilen zu großen Gitter-Trommeln verbunden mit etwa zwei bis drei Meter Durchmesser und zehn bis dreißig Meter lang. Fördereinrichtungen deren Antriebs-und Umlenk-Trommeln in Längsrichtung überstehen sind fest eingebaut. Die Gittertrommeln sind mit Kupplungen und Kardangelenken beweglich oder mit Rohren oder Profilen starr verbunden. Beliebig viele dieser insgesamt Förderanlagen darstellenden Einheiten sind kuppelbar, entkuppelbar und können einzeln oder mehrere zusammen durch seitliches Rollen Ort und Richtung auf einem großen Gelände oder in Werken usw. ändern. Leitungen für Strom,Steuerung und Signale sind bei jeder Einheit mit Steckern lösbar und wieder einfach zu verbinden.

Figur 32 Querschnitt zu Figur 31.

Figur 33 Eine sechs-eckige Gitter-Trommel, hier ohne Fördereinrichtungen, ist ebenfalls rollbar, hat aber eine natürliche Standfestigkeit, die nur noch am Hang eine Abstützung erfordert.

Figur 34 Eine runde Gitter-Trommel, aber an Rollen hängende Fördereinrichtungen, die aufgrund ihres tiefen Schwerpunktes, auch beim Rollen , in den vorgegebenen Arbeitslagen bleiben.

Figur 35 Seitenansicht zu Figur 34 mit den Rädern die außen auf den Ringen laufen und an deren Achsen und Halterungen die Fördereinrichtungen hängen.

Figur 36 Querschnitt durch einen Ring aus U-Profil mit einem niedrigen Schenkel, damit die Räder gut in der sich ergebenden Spurrille laufen und die Achsen mit Halterungen die Fördereinrichtungen mit-tragen können. In der Gitter-Trommel können beliebig viele Ringe aus U-Profil befestigt werden.

Figur 37 Rohr-Gitter-Konstruktion, ebenfalls als Gitter-Trommel bezeichnet, mit größerem vorderen Durchmesser und vorzugsweise von Antriebsrädern am Boden während des Förderns weitergerollt. Die angekuppelten Gitter-Trommeln rollen mit, das zu fördernde Produkt wird von den zentral zueinander angeordneten Antriebstrommeln und Umlenktrommeln weitergegeben, sodaß Winkeländerungen der Gitter-Trommeln zueinander nicht nachteilig sind.

Figur 38 Vorderansicht zu Figur 37.

Figur 39 Tragkonstruktionen wie sie aus den vorher beschriebenen

Figur 40 Konstruktionsteilen erstellt werden. Überdachungen aus Kunststoff, oder vorzugsweise aus Wellblech wenn sie als tragende Elemente in die Konstruktion einbezogen werden.

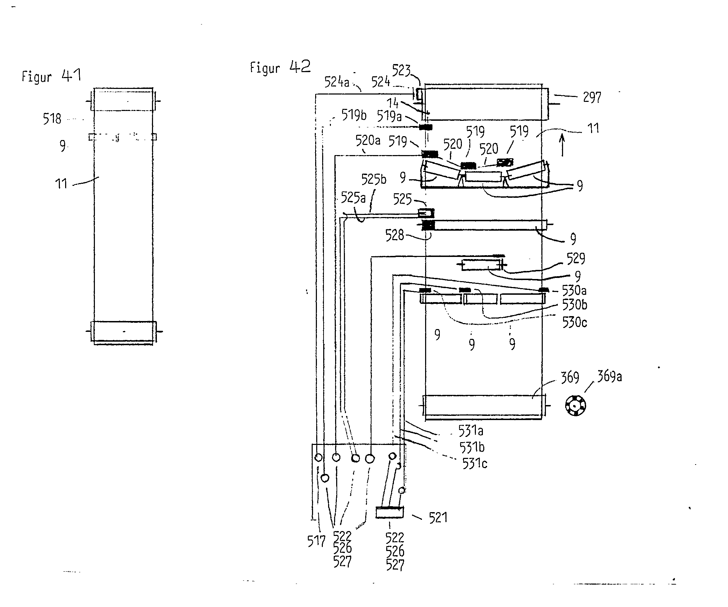

Figur 41 Draufsicht auf eine Fördereinrichtung.

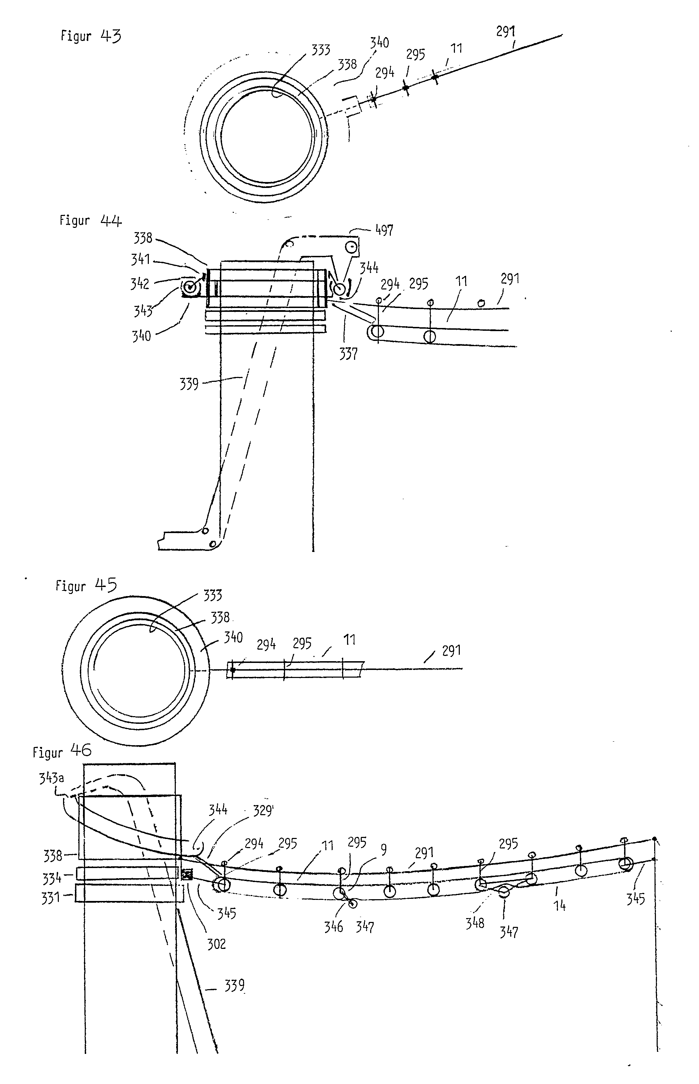

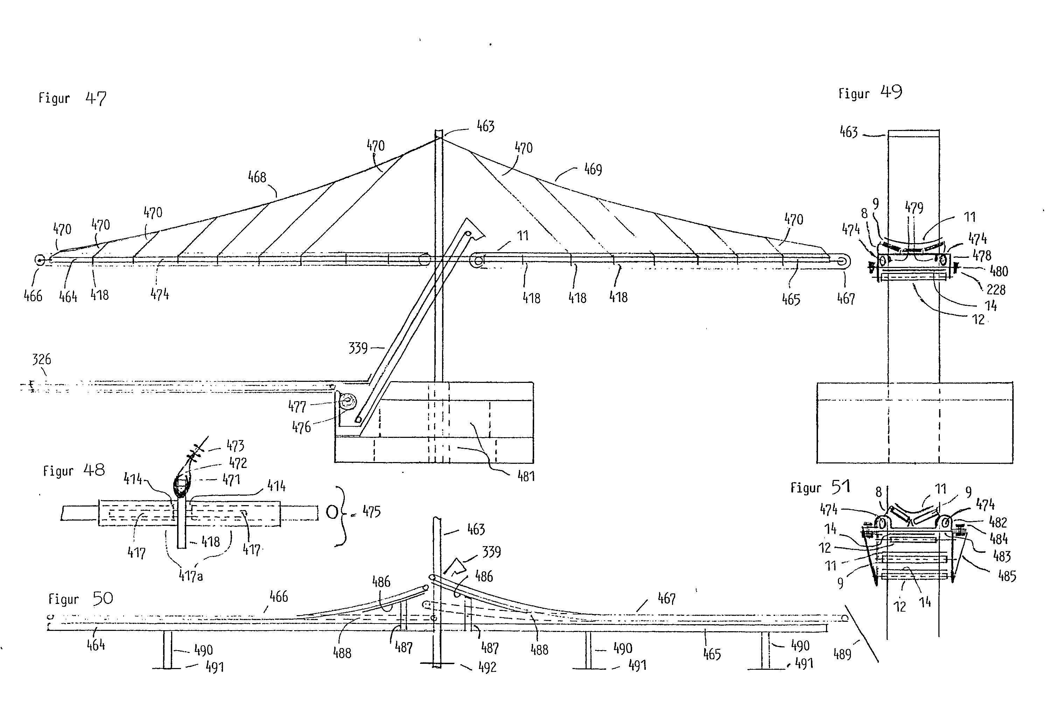

Figur 42 Fördereinrichtung mit Antriebstrommeln, Tragrollen und Umlenktrommel, deren Funktion überwacht wird. Wenn sich drehende Teile langsam oder nicht mehr drehen, werden Signale gegeben, Fördereinrichtungen und damit verbundene Anlagen abgeschaltet und Kontroll-Lampen werden beeinflußt.

Die folgende Tabelle betrifft die Ziffern und Begriffe, wie diese in den Ansprüchen, in der Beschreibung und in den Figuren verwendet werden.

9 ) Tragrollen oder mehrere als Muldenstation

10 ) Achsen

11 ) Fördergurte

12 ) Untergurtrollen

13 ) Achsen

14 ) unteres Trum (der Fördergurte 11)

15 ) Schlitze

15a) Schlitze

16 ) Keile

16a) Keile

17 ) Bandagen

17a) Bandagen

289 ) Mast,Gebäude

290 ) Seilbefestigung

291 ) Tragseil

292 ) Mast,Mauer,Gebäude

293 ) Spurrollen

293a) Schwerpunkt

294 ) Wellen

295 ) Gehängerahmen

296 ) Trommelmotor

297 ) Antriebstrommel

298 ) Kabel für Strom

299 ) Leitrolle

300 ) Leitrolle

302 ) Winde

303 ) Zugseil,oberer Strang

304 ) Zugseil,unterer Strang

305 ) Spurscheibe

306 ) Befestigungspunkte,oben

306a) Befestigungspunkte,unten

307 ) Verbundseil

308 ) Winde unten

309 ) Zugseil,unterer Strang

310 ) Spurscheibe

311 ) Zugseil,oberer Strang

312 ) Schienen

313 ) Deponie,Schüttgelände

314 ) Drehpunkt

315 ) Fahrwagen

315a) Fahrwagen

315b) Fahrwagen

316 ) Befestigungspunkt

317 ) Ballast

318 ) Räder

319 ) Schienen

320 ) Fahr-Räder

321 ) Stützräder

322 ) Ballastbehälter

323 ) Ballastbehälter

324 ) Aktionsradius

325 ) Aktionsradius

326 ) Förderanlagen,abgedeckt
327 ) Förderanlagen, im Boden
328 ) Elevatoren
329 ) Rutschen
330 ) Vibrationsrinnen
331 ) Drehkränze
332 ) Drehkränze
333 ) Rohrmast
334 ) Drehkranz
335 ) Steilförderband
336 ) Produkte
337 ) Rinne,Rohr
338 ) Drehkranz
339 ) Steilförderanlage
340 ) Trog
341 ) Kette,umlaufend
342 ) Arme
343 ) Förderscheiben
343a ) Trog
344 ) Öffnung
345 ) Spannseil
346 ) Tragarme
347 ) Druckrollen
348 ) Dreieckgestänge
349 ) Tragseilträger
350 ) Winde mit Motor im Gehäuse
351 ) Gebäude,Wetterschutz
352 ) Bedienungsbühnen,Laufstege
353 ) Bedienungsbühnen,Laufstege
354 ) Klemmsperre
355 ) gestrichelte Positionen
356 ) Puffer
357 ) Regenschutz
358 ) Stahlträger
359 ) Laufschiene
360 ) Zahnschiene
361 ) Laufrad
362 ) Spurkranz
363 ) Zahnrad
364 ) Antrieb
365 ) Antriebsriemen
366 ) Drahtseil
367 ) Drahtseiltrommel
368 ) Streben
369 ) Umlenktrommel
369a ) Umlenktrommel,Seitenansicht
370 ) Spannvorrichtung
371 ) Achse an der Umlenktrommel (auch Antriebstrommel)
372 ) Achse der Antriebstrommel
373 ) Hydraulik-Zylinder , Spindeln
374 ) Stahlträger
375 ) Steg
376 ) Girlanden-Tragrollen
377 ) Haken
378 ) Spurkranz,unten, groß
379 ) Regenabweiser
380 ) Leitbleche

381 ) Boxen
382 ) Boxen
383 ) Boxen
384 ) Silos
385 ) Trennwände
386 ) Radlader
387 ) Tragmast
388 ) Ausleger
389 ) Gleitschienen
390 ) Hydraulikstempel
391 ) Abstreifer
392 ) Bürsten
393 ) Hydraulikstempel
394 ) Platte
394a ) Motor-Antrieb
395 ) Netze
396 ) Seile,Bänder
440 ) Rohr-Gitter-Konstruktion
441 ) Ringe
442 ) Doppelringe
443 ) Längsträger
444 ) Kupplungen
445 ) Gestänge
446 ) Abstützungen
447 ) Räder
448 ) Achsen
449 ) Halterungen
450 ) Förderband-Längsträger
451 ) Räder
452 ) Innenringe
453 ) Vorderteil
454 ) Antriebsräder
455 ) Laufstege
456 ) Überdachungen
518 ) Fördereinrichtung
519 ) Aufnehmer
519a ) Aufnehmer
519b ) Draht
520 ) Draht,Drähte
520a ) Drähte
525 ) Aufnehmer, hohl
525a ) Draht
525b ) Draht
526 ) Schaltgeräte
527 ) Signalgeräte
528 ) Kunststoffschicht
529 ) Kunststoff-Scheibe
530a ) Aufnehmer
530b) ) Aufnehmer
530c ) Aufnehmer

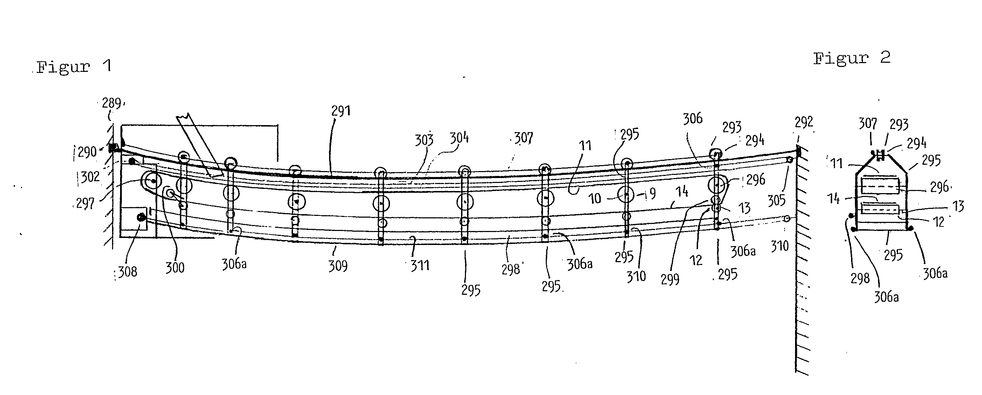

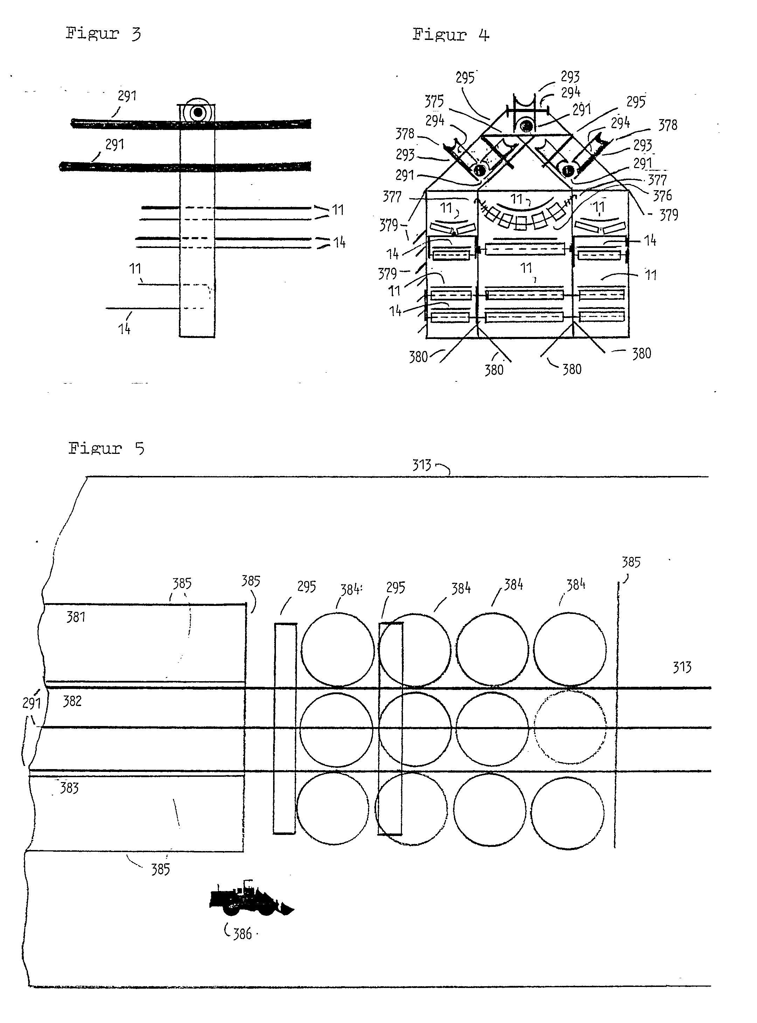

Die Figuren werden nachstehend beispielsweise erläutert. Die Figuren 1 und 2 zeigen Förderanlagen mit einfacher Anpassung an Änderungen des Förder-Konzeptes und an Änderungen der Dispositionen, mit manueller Steuerung der Anlage oder mit halb-und voll-automatischer Steuerung, ohne Demontage und Neu-Montage.

Es können so verpackte als auch unverpackte Güter befördert werden.

Hier wird die Halden-Lagerung (Deponierung) von Massenschüttgütern gezeigt. Vorzugsweise handelt es sich dabei um Kohle, Koks, Müll, Erzeugnisse der Steine-Erden-Industrie, z.B. Kies,Sand, Splitt und andere Materialien, die in grossen Mengen aufgeschüttet und gelagert werden.

An einem Mast (289),mit Seilabspannung, oder an einem Gebäude, oder im Boden mit Betonankern vorzugsweise, ist mit der Seilbefestigung (290) das Drahtseil (291) als Tragseil verankert. Eine gleiche Verankerung erfolgt mit ebenso an sich bekannten Mitteln an einem Mast (292).

Die Spurrellen (293) mit den Wellen(294) laufen auf dem Tragseil (291) und tragen am Gehängerahmen (295) , die Tragrollen(9) mit denAchser (10) und dem Fördergurt (11);
und die Untergurtrollen (12) mit den Achsen (13) und dem Untertrum dest ördergurtes (14).

Der Antrieb erfolgt durch den Trommelmotor (296) oder wahlweise durch die Antriebstrommel (297) und durch die nicht sichtbare übliche Antriebsmittel. wie Motore und Getriebe. Bei Antrieb durch den Trommelmotor (296) wird der Strom über das an den Gehängerahmen (295) befestigte Kabel (298) zum Trommelmotor (296) geleitet.

Vorzugsweise sollen beide Antriebe eingeschaltet werden wenn bei spezifisch leichten Produkten, der Fördergurt (14) zum Abheben neigt, weil das Tragseil (291) mit den Gehängerahmen (295) und damit auch die Tragrollen (9) durchhängen; oder wenn große Belastungen durch die Förderung von Produkten mit hohem spezifischen Gewicht , z.B. Steine, Splitt 1 m³ = 1,8 t, über längere Strecken, etwa über 50 m erfolgt.

Eine Leitrolle (299) ist vorn und eine Leitrolle (300) ist hinten-jeweils so passend zu den Antrieben angebaut- damit der Fördergurt (11) sicher auf den Untergurtrollen (12) liegt. Die Winde (302) mit dem umlaufenden Zugseil,oberer Strang(303) und dem Zugseil,unterer Strang (304) zieht die Zugseile um die Spurscheibe (305). Am ersten Gehängerahmen (295) ist das Zugseil mit dem oberen Strang (303) am Befestigungspunkt (306) befestigt.

Die Winde (302) kann also mit Handkraft oder Motor-Antrieb, dann vorzugsweise mit Schaltautomatik, den Gestängerahmen (295) in Richtung der Spurscheibe (305) soweit ziehen, bis der Fördergurt (11) straff genug ist, dann schaltet bei Beginn der nun eintretenden Überlastung der Motor der Winde (302) ab. Wahlweise ist zum Abschalten auch eine Rutschkupplung eingebaut, die den Strom abschaltet,sobald sie ansprechen muß. Auch die zu ziehende Länge wird vorgegeben, wenn das in den noch folgenden Ausführungsbeispielen erforderlich ist. Das Verbundseil (307) zieht alle Gehängerahmen (295) mit, weil es an jedem Gehängerahmen (295), nahe den Spurrollen (294) angeschraubt ist. Die Abstände der Gehängerahmen (295) werden so vorgegeben und eingehalten. Die Entfernung soll entsprechend der Belastung etwa 0,70 bis 2,50 m sein.

Die untere Winde (308) zieht den unteren Strang des Zugseiles (309) über die Spurscheibe (310). Das Zugseil, oberer Strang (311) ist an den Befstigungspunkten (306 a) mit allen Gehängerahmen (295) am unteren Rand verbunden.

Diese Anordnung (308) bis (311) gibt es an beiden Seiten der Förderanlage. Schaltungen wie bei der oberen Winde (302).

Die Figuren 3 und 4 zeigen Gehängerahmen (295), der mit drei Spurrollen (293) und drei Wellen (294) auf drei Tragseilen(291) laufen. Fördergurte (11) und Untertrums (14) sind (mit den dazugehörigen Tragrollen und Untergurtrollen) wie schon vorher beschrieben, angeordnet; bis auf die Girlanden-Tragrollen (376) , die vorzugsweise mit den Haken (377) befestigt sind. Mit den drei Tragseilen (291) werden höhere Tragkräfte und höhere Stabilitäten gegen Schwankungen erreicht. Stege (375) und untere, besonders grosse Spurkränze (378) verhindern, dass die Spurrollen (293) aus den Tragseilen (291) springen können. Regenabweiser (379) schützen die zu fördernden Produkte, lasssen aber Wind zwischen den Regenabweisern (379) hindurch um starke Winddrücke und damit zusätzliche Belastungen und Schwankungen zu vermeiden. Leitbleche (380) leiten die von Fördergurten (11) kommenden Produkte zur Seite,bzw.Mitte. So können mit entsprechend langen Leitblechen auch Halden nebeneinander aufgeschüttet oder Boxen beschickt werden. Die unten laufenden Fördergurte (11) sind vorzugsweise kürzer, sind also nicht bis zu den vordersten Gehängerahmen (295) geführt, sodaß bei übereinander angeordneten Fördergurten (11) die Produkte verschieden weit auf die Halde gefördert werden können.

Figur 5 zeigt in Draufsicht wie mit Gehängerahmen (295) an drei Tragseilen (291) mehrere Bereiche eines Schüttgut-Geländes (313) mit zusätzlichen boxen (381,382,383) mit Trennwänden (385), Silos (384) und weiterem Schüttgelände (313) ohne Boxen gefüllt werden. Diese Anordnungen haben den großen Vorteil, daß die in Silos gefüllten Produkte bei laufendem Absatz, also laufender Abfuhr, pro Silo täglich 1000 bis 2000 t betragen können. Die unter die Silos fahrenden Lastfahrzeuge sind stets in kürzester Zeit gefüllt. Wenn bei einzelnen Körnungen oder Produkten nicht soviel abgefahren wird, wie über die Bördergurte (11) herangefördert wird, können Boxen(381, 382, 383) und weiteres Schüttgelände (313) die vorübergehend von den Silos nicht zu fassenden Mengen aufnehmen.

Bei dem nach Figur 5 beschriebenen Silobetrieb, bleiben die durch Radlader (386) wieder auf Transportfahrzeuge aufzuladenden Mengen gering. Das ist wirtschaftlich bedeutungsvoll; denn die Radlader (386) -und in schwerem Gelände:Laderaupenhaben vorzugsweise Dieselmotoren von 100 bis 300 kW und fassen jeweils mit der Schaufel 1 bis 5 Kubikmeter. Jeder Kubikmeter der so aufgeladen wird, verursacht Kosten von mindestens DM 1,- pro Kubikmeter. Das sind oft mehrere Tausend DM täglich. Das führt bei Produkten an der Rentabilitätsgrenze zu Verlusten.

Förderanlagen mit Gehängerahmen (295) erfüllen die gleichen Anforderungen im Prinzip auch mit ein-oder zwei Tragseilen (291) , mit aber geringeren Förderleistungen.

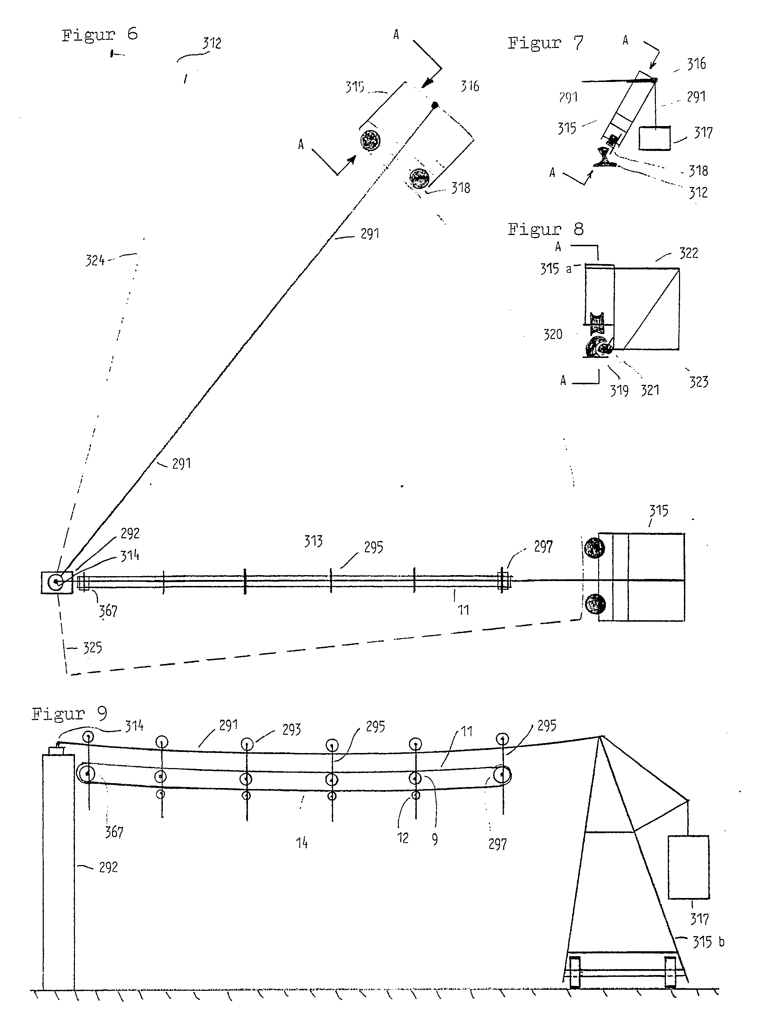

Figur 6 zeigt Schienen (312) die imHalbkreis ein Schüttgut-Gelände (Deponie) (313) umgrenzen.Das Tragseil (291) ist an einem Mast (292) -auch Mauer,Gebäude- im Drehpunkt (314) schwenkbar gelagert und mit dem Fahrwagen (315) fest verbunden; vorzugsweise so, daß das Tragseil vom Befestigungspunkt (316) senkrecht nach unten weitergeführt wird und mit dem Ballast (317) ein Gegengewicht zum Tragseil (291) mit allen Förder- und Betätigungseinrichtungen nach Figur 68 und 69 bildet.

Figur 7 zeigt den Fahrwagen (315) der vorzugsweise in Schräglage angeordnet ist;und die Räder (318) auf den Schienen (312). Das Tragseil-(291) wird von einer Winde gehalten.

Figur 8 zeigt die Schienenart (319) mit Fahr-Rädern (320) Stützrädern (321) und Ballast-Behältern (322) und (323).

Diese Ballstbehälter sollen vorzugsweise mit Material höchsmöglichen spezifischen Gewichts gefüllt werden.Es soll Beton mit Stahlstücken oder Platten aus gleichem Material oder Blei in Platten verwendet werden.

Der Strom für den Antrieb der Räder (318),(320) und (321) wird über das Kabel (298) zugeführt.

Das Schüttgutgelände (Deponie) (313) soll für hohe Lagerkapazität Kreisform haben und es sollen auch zwei und mehr Fahrwagen (315) mit Tragseil (291) usw. aufgebaut werden. Dann können auch unterschiedliche Produkte und/oder unterschiedliche Körnungen gleichzeitig auf Halde gefördert werden. Stahlkonstruktionen mit größerem Aufwand und begrenzter Reichweite der Aufschüttung durch die aufgelegten Förderbänder würden damit vermieden. Auch die Bandschleifen mit fahrbaren Bandwagen und seitlichen Auslegern mit Förderbändern und trotzdem begrenzter seitlicher Reichweite- sind nicht mehr erforderlich und die Investitionen sind bei den erfindungsgemäßen Förderanlagen wesentlich geringer. Ein weiterer Vorteil ist die völlig freie Fläche, ganz ohne Stahlkonstruktionen mit Masten und Förderbandbrücken bisher bekannter und üblicher Art.

Die gestrichelten Linien (324) und (325) zeigen den großen Aktionsradius auf einem Schüttgutgelände (Deponie) (313) das vorzugsweise die Fläche eine Halbkreises oder Kreises hat. Das Schüttgutgelände (313) bleibt bei diesem System frei von allen Strahlkonstruktionen und es kann von Lade-und Transport-Fahrzeugen frei befahren werden.

Figur 9 zeigt die Vorderansicht zu Figur 6, Das Tragseil (291) ist an einem Mast (292) -auch Mauer,Gebäude,Turmim Drehpunkt (314) schwenkbar gelagert und hier mit einem nicht auf Schienen fahrenden Fahrwagen (315 b) verbunden. Das Tragseil (291)trägt die Gehängerahmen (295), mit der Antriebstrommel (297), den Tragrollen (9), dem Fördergurt (11), die Umlenktrommel (367), die Untergurtrollen (12) und das Untertrum (14).

Wenn die Schüttgüter und die sonstigen zu fördernden Güter für die erfindungsgemäß beschriebenen Förderanlagen nach den Figuren 1,2,6,7,8,9 auf konventionelle Art zugeführt würden,so könnten die Fahrwagen (315, 315 a, 315 b) keine Kreise mit 360 Grad fahren und die Dispositionsmöglichkeiten würden eingeschränkt, auch weil bei zwei und mehr Fahrwagen (315, 315 a, 315 b) die Reihenfolge nicht geändert werden könnte.

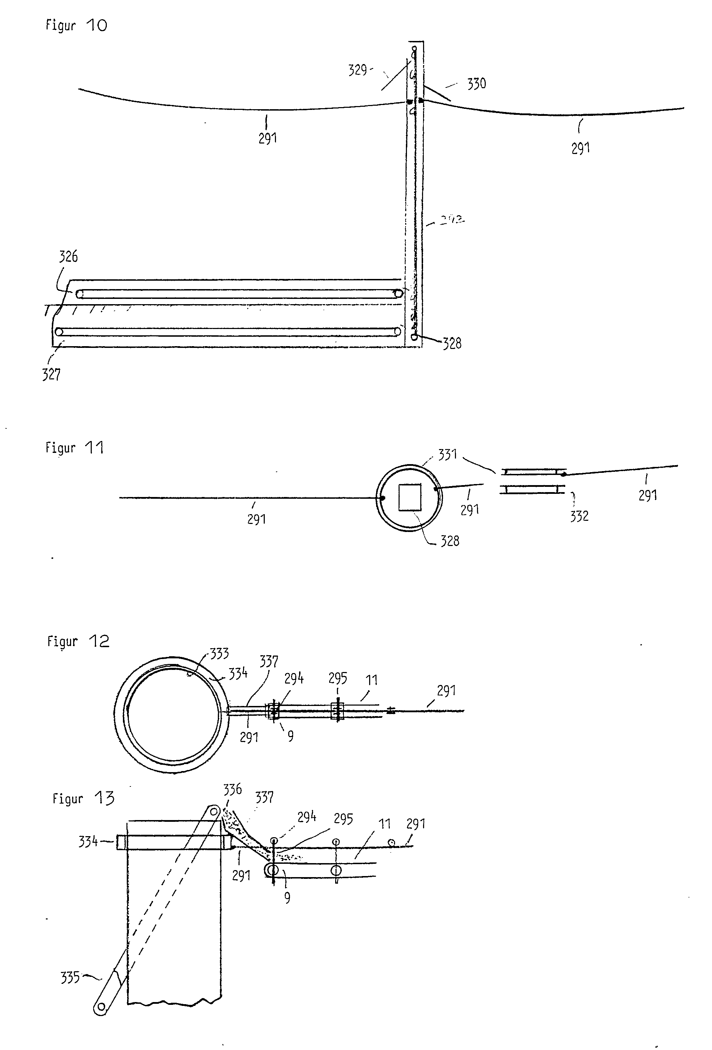

Figur 10 zeigt, wie erfindungsgemäß die zu fördernden Güter mit abgedeckten(326) oder im Boden befindlichenFörderanlagen (327) bis zum Mast oder Gebäude oder Turm (292) herangefördert und mit Steilförderanlage , hier Elevator (328) nach oben und von hier auf die beschribennen Förderanlagen (über die Rutschen (329) und Vibrationsrinnen (330) aufgeschüttet werden.

Figur 11 : Drehkränze (331) und (332) halten die Tragseile (291) und ermöglichen das Fahren der Fahrwagen (315) um 360 Grad. Die Verankerung der die Drehkränze (331) und (332) tragenden Teile muß so bemessen sein, daß auch eine Annäherung der Fahrwagen (315) zueinander und die dadurch erhöhten Zugkräfte aufgenommenwerdenkönnen; oderes müssen die Annäherungen begrenzt , also ein bestimmter Mindestabstand eingehalten werden. Bei mehr als zwei Fahrwagen (315) werden die aufzunehmenden Zugkräfte sich besser ausgleichen.

Die figuren 12 und 13 zeigen einen Rohrmast (333) , vorzugsweise aus Stahlbeton, Stahlrohr oder in Gitter-Konstruktion, wahlweise mit Verkleidung gegen Wettereinflüsse. Das Tragseil (291) ist am Drehkranz (334) befestigt. Das Steilförderband (335) fördert die Produkte (336) in die Rinne, vorzugsweise in das Rohr (337) und von dort fließen die Produkte auf den Fördergurt (11) der auf den Rollen (9) der Gehängerahmen (295) läuft.

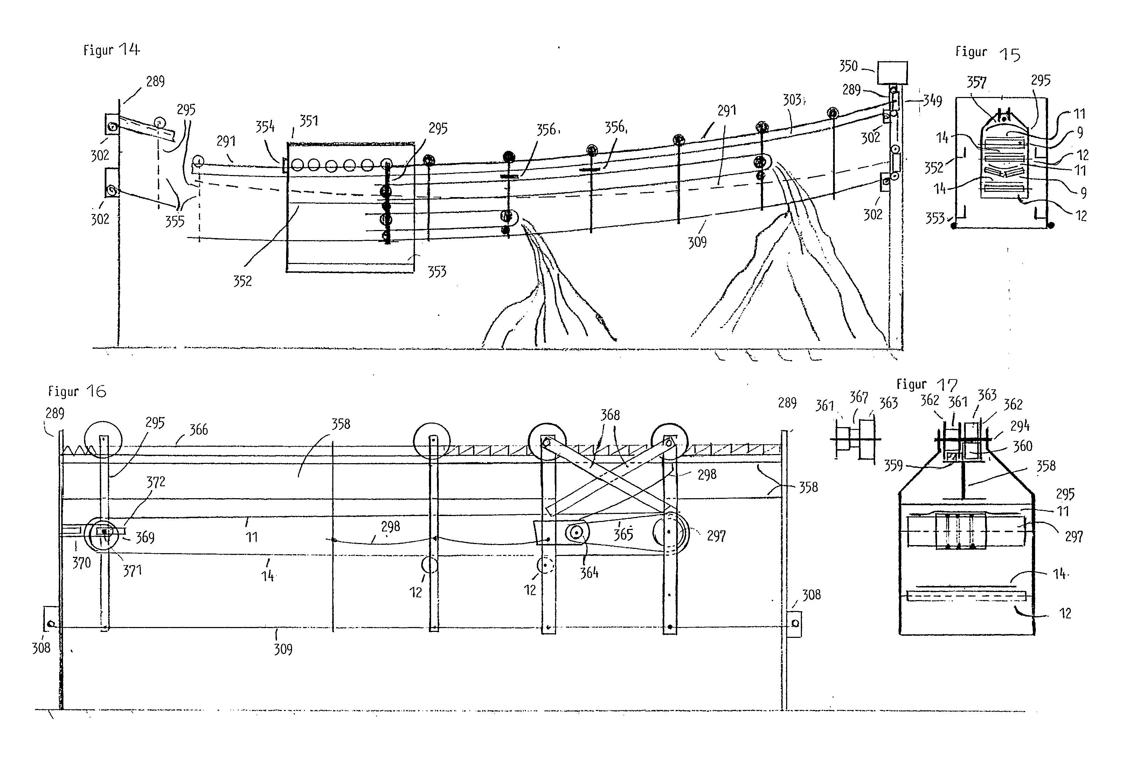

Figuren 14 und 15 zeigen eine Stetigfördereranlage deren Tragseil (291) zwischen den Masten (289) gespannt ist.Die Höhenverstellung des Tragseils (291) erfolgt dadurch,daß der Tragseil Träger (349)von einer Winde mit Motor im Gehäuse (350) abgelassen und hochgezogen wird. Dadurch ist es möglich, daß empfindliche Schüttgüter und sonstige Produkte zunächst aus geringer Höhe auf die Halde fallen.Schon bei Splitt und Schotter soll nach der Zerkleinerung und nach den genauen Absiebungen, keine unkontrollierbare Nachzerkleinerung durch den Sturz aus unnötig großer Höhe erfolgen, weil sonst die Gütevorschriften nicht eingehalten werden können.

Das Tragseil (291) soll auf die gestrichelte Linie und bei Bedarf noch weiter abgesenkt werden.

Die Gehängerahmen (295)tragen zweifach, also in doppelter Ausführung die Tragrollen(9) und die Untergurtrollen (12). Dazu die Fördergurte (11) und das Untertrum (14). So können zwei verschiedene Körnungen oder Produkte gleichzeitig auf Halde gefahren werden. Zur Reparatur oder zur Wartung werden die Gehängerahmen (295) in's Gebäude oder unter den Wetterschutz (351) mit Bedienungsbühnen oder Laufstegen (352) und (353) gefahren. Dazu wird eine Klemmsperre (354) am Gebäude oder Wetterschutz(351) in Klemmstellung gebracht und die Winde (302)zieht die Gehängerahmen (295) in's Gebäude oder unter einen Wetterschutz (351) ; sozusagen in den "Bahnhof". Alle Gehängerahmen (295) sollen dann nach links in die gestrichelten Positionen (355) gefahren werden, wenn in diese Richtung gefördert werden soll, oder wenn das hier ansteigende Gelände die Wartung und Reparatur ermöglicht und die Aufstellung eines Gebäudes oder eines Wetterschutzes (351) erleichtert.Puffer (356) werden an den Gehängerahmen (295) angebracht, wenn ein seitlicher Regenschutz (hier nicht abgebildet) aus vorzugsweise verrottungsfestem und dichtem Stoff beim Einfahren in's Gebäude oder unter den Wetterschutz (351) zwischen den Gehängerahmen (295) nicht gequetscht und beschädigt werden soll. Der von oben wirksame Wetterschutz (357) wird damit ebenso geschützt. Zugseile (303) und (309) sind jeweils mit den Winden (302) verbunden.

Figur 16 und 17 zeigen die Masten (289) und den daran befestigten Stahlträger(358) der über eine Hälfte der Breite die Laufschiene (359) und über die andere Hälfte der Breite die Zahnschiene (360) trägt. Auf der Welle (294) ist das Laufrad(361) mit Spurkranz (362) und das Zahnrad (363) mit Spurkranz (362) gelagert. Der an der Welle (294) aufgehängte Gehängerahmen (295) trägt die Antriebstrommel (297), die vom Antrieb (364) über den Antriebsriemen (365) angetrieben wird.Der Fördergurt (11) läuft also auf der Antriebstrommel (297) und auf dem Antriebsriemen (365). Das Untertrum (14) läuft unter und über den Untergurtrollen (12).

Das Kabel für Strom (298) ist leicht durchhängend an den Gehängerahmen (295) befestigt und wird zum Antrieb (364) und von da auch zum Antrieb des Laufrades (361) und des Zahnrades (363) geführt. Laufrad (361) und Zahnrad (363) tragen den hier nicht sichtbaren Antrieb innen.Bei glatten Laufschienen (359), ohne Zahnschienen (360), oder auf Tragseilen (291) ist ein Drahtseil (366) um die Drahtseiltrommel (367) geschlungen und zwischen den Masten (289) gespannt. An dieser Drahtseiltrommel (367) bewegt sich der Gehängerahmen (295) vorwärts und rückwärts, geschaltet über ein Kabel das mit im,oder am Kabel für den Strom (298) liegt. Die anderen Gehängerahmen werden mitgezogen:nach vorn; oder geschoben: nach hinten. Die ersten beiden Gehängerahmen (295) sind mit Streben (368) verbunden um die Gegenkräfte des Antriebs(an den Laufschienen (359) oder den Zahnschienen (360)) aufzunehmen. Dieser Antrieb für die Gehängerahmen wird ebenso verwendet, wenn die Gehängerahmen (295) an Tragseilen (291) hängen. Die Umlenktrommel (369) soll dann als Antriebstrommel -zusätzlich also angetrieben- wirken, wenn die Gesamt-Förderlänge und/oder die Belastung durch das Fördergut so groß ist, daß der Antrieb (364) nicht ausreicht, oder daß durch diesem zusätzlichen Antrieb der Umlenktrommel (369) die Belastung des Fördergurtes (11) mit Untertrum (14) herabgesetzt und damit die Betriebssicherheit und die Lebensdauer erhöht werden. Die Umlenktrommel (369) wird bei der Verwendung als Antriebstrommel, angetrieben durch einen Antrieb (364) mit Antriebsriemen (365) oder auf eine der anderen bekannten Arten, z.B. von einem Motor über Getriebe mit einer Kupplung auf die Achse (371).Die Spannvorrichtung (370) zieht die Achse und damit die Umlenktrommel/Antriebstrommel (369) auf Spannung des Fördergurtes (11) mit Untertrum (14). Das geschieht durch Vorspannung mit Hydraulik-oder Pneumatik-Zylindern, durch Federn oder Elastomere.Mit dem Zugseil (309) und den Winden (308) , werden die Gehängerahmen (295) unten gleichzeitig mit den oberen Antrieben im Zahnrad (363) oder der Drahtseiltrommel (367) vor- und zurück- gezogen.

Der Spannweg ist bei dem geringen Spielraum des Gestängerahmens (295) nicht groß; deshalb ist die Achse (371) beidseitig in je einem Profil mit Längsschlitz gelagert, das am Gestängerahmen (295) angeschraubt oder angeschweißt ist.

Die Spannvorrichtung (370) soll durch die Länge und durch Druck oder Zug der erwähnten Bauteile die gewünschte Spannung des Fördergurtes (11) in möglichst enger Toleranz konstant halten ; oder vorzugsweise soll die Spannung des Fördergurtes (11) oder ein Nachlassen der Spannung die Spannvorrichtung (370) steuern, vorzugsweise über Druck-Änderungen in Hydraulik und/oder Pneumatik und bei Förderlängen über zwanzig Meter und bei Belastungsschwankungen im Zusammenwirken mit Federn und/oder Elastomeren. Figuren 83 und 84 zeigen eine Förderanlage mit Tragseil (291) und Gehängerahmen (295) bei der die Antriebstrommel (297) und die Umlenktrommel (369) schräg liegend angeordnet sind und auf dem Fördergurt geförderte Produkte sortiert werden. Dies sind Früchte oder z.B. oder um Kies , teils flach, teils rund, oder um eine Mischung aus Holz und Kies, oder um sonstige Produkte. Die runden Bestandteile einer solchen Mischung rollen ab und die flachen Bestandteile werden auf dem Fördergurt (11) liegend, ausgetragen. Die jeweils erforderliche und optimale Schräglage (Neigung) wird vorzugsweise mit Hydraulik-Zylindern oder Gewindespindeln (373) die die Achse (372) heben oder senken, eingestellt. Ebenso werden die Tragrollen eingestellt. Bei Hydraulik soll das zentral von einer Steuerung aus geschehen. Mit den Winden (308) und mit dem an den Gehängenahmen befestigten Zugseil (309) und auch in Kombination mit den Winden (302) oben und dem Zugseil (303) können Bewegungen in den Fördergurt (11) gebracht werden:kurze Impulse diesen. Bewegungen lassen u.a.auch sehr flache Produktbestandteile zum Abrutschen kommen und eine feine Trennung der Produkte zu. Wenn das Produkt naß ist, werden Fördergurte (11) mit Schlitzen verwendet, um das Wasser ablaufen zu lassen; diese Wirkung soll auch bei nicht schräg gestellten Fördergurten (11) genützt werden und auch schon vor den Bereichen mit Schräglage (Neigung) des Fördergurtes(11).

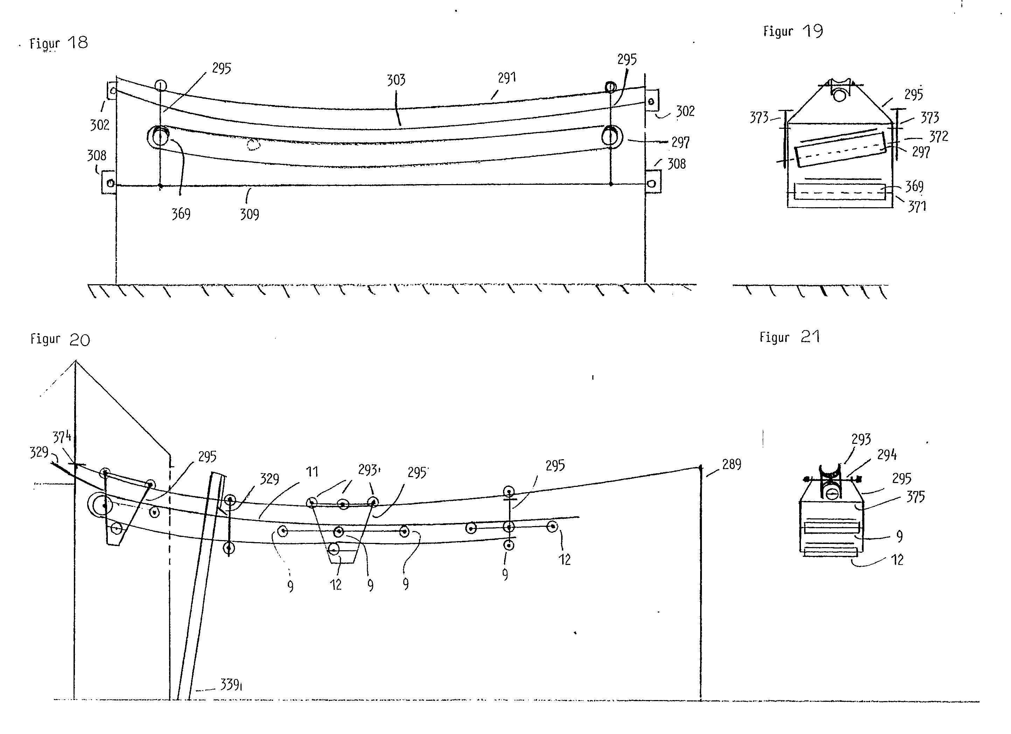

Figuren 20 und 21 zeigen die Förderanlage mit der Befestigung des Tragseiles (291) zwischen dem Stahlträger mit Stütze (374) im Gebäude und Mast (289).Auf den Fördergurt (11) wird aus den Produktions-und/oder Förderanlagen über die Rutsche (329) (oder bei waagerechter Förderung über gleich wirkungsvolle Rörderrinnen mit Vibrator , Schnecken oder Luftförderrinnen) und aus der Steilförder-Anlage , ebenfalls über eine Rutsche (329) das zu fördernde Produkt aufgegeben. Die Gehängerahmen (295) mit zwei und mehr Spurrollen (293) sind in Trapezform ausgeführt um in Längsrichtung auf dem Tragseil ein größere Stabilität zu erreichen, wo das durch schwankende Fördergut-Belastung und durch Wind notwendig ist und um Tragrollen (9) und Untergurtrollen (12) auch in zwei-und mehrfacher Ausführung aufnehmen zu können. Die Zahl der Gehängerahmen (295) wird dadurch verringert und die Zahl der Tragrollen (9) und der Untergurtrollen (12) kann auf günstiger Konstruktions-und Kostenlage vergrößert werden. Die Welle (294) ist abschraubbar, sodaß Gehängenahmen (295) ausgetauscht werden können und es können die Stückzahlen der Gehängerahmen (295) und der Tragrollen (9) und der Untergurtrollen (12) verändert und den jeweiligen Aufgaben-Änderungen angepaßt werden; z.B. Änderung der Förderlängen und der Produkte.Der Steg (375) verstärkt die Konstruktion der Gehängerahmen (295) und er verhindert daß die Spurrollen (293) vom Tragseil (291) abspringen.

Figur 22 zeigt einen Tragmast (387) mit Ausleger (388) der das Tragseil (291) trägt. Darauf läuft die Spurrolle (293) mit Welle (294) und Gehängerahmen (295). Bei größeren Schüttgutlagern sind Tragmaste (387) erforderlich um die Entfernungen zu überbrücken und -auch bei kleineren Schüttgutlagern- werden so Richtungsänderungen des Förderweges vorgenommen; dabei sind kurvengängige Fördergurte (11) und entsprechende Tragrollen (9) und Untergurtrollen (12) eingebaut.Der Gehängerahmen (295) ist einseitig angehängt. Der Steg (374) sichert die Spurrolle (293) damit sie nicht von dem Tragseil (291) abspringen kann.

Figur 23 zeigt zwei Tragmaste (387) mit Tragseilen (291) die mit Spurrollen (293) und Wellen (294) den Gehängerahmen (295) tragen. Der Steg (375) sichert die Spurrollen (293)und ist hier tragendes Teil des Gehängerahmens (295).

Figur 24 zeigt einen Tragmast (387) in Ansicht "A": die Gleitschinen (389) an den Auslegern (388) verhindern, daß der obere Rand des Gehängerahmens (295) an die Ausleger (388) anstößt.Mit zwei und mehr Tragseilen (291) werden höhere Tragkraft und Förderleistungen und grössere Stabilität gegenSchwankungen durch Wind und Betrieb erreicht, und es hängen die Gehängerahmen(295) senkrecht.

Bei Figur 22 mit einem Tragseil (291) wird der Gehängerahmen so einseitig gehängt, daß der Schwerpunkt in der Mitte (293a) der Spurrolle (293) liegt.

Figur 25 zeigt Tragrollen (9), die zusammen eine Mulde bilden und den Fördergurt (11) tragen.

Figur 26 zeigt wie vorzugsweise Hydraulikstempel (390) die Tragrollen (9) in die waagerechte Lage bringen und wie damit der Fördergurt (11) ebenfalls waagerecht liegt. Auch eine schräge Lage des Fördergurtes (11) wird mit den Hydraulikstempeln (390) oder auch mit Pneumatik oder mit Gewindespindeln erzielt : das alles dient dazu, das geförderte Produkt an beliebigen Stellen des Fördergurtes (11) abzuwerfen, statt es am vorderen Ende herabfallen zu lassen. Notwendig ist dieser Abwurf an beliebiger, aber vorbestimmter Stelle, wenn bestimmte Produkte oder Körnungen separat gelagert werden sollen, oder wenn das Schüttgut an bestimmten Stellen höher oder niedriger aufgeschüttet werden soll.

An dieser ebenen oder leicht geneigten Stelle des Fördergurtes (11) werden Abstreifer (391) und/oder Bürsten (392) vorzugsweise diagonal zur Laufrichtung des Fördergurtes (11) auf den Fördergurt (11) geschwenkt oder von oben herabgesenkt.

Figuren 27 und 28 zeigen wie vorzugsweise ein Hydraulikstempel (393) die Platte (394) und damit den Fördergurt (11) anhebt und in die waagerechte Lage bringt. -Mit zwei Hydraulikstempeln (393) wird eine gewünschte Neigung = Schräglage erreicht. Der Abstreifer (391) und/oder die Bürste (392) schieben und/oder kehren das geförderte Produkt ab !

Die Bürste soll -diagonal angeordnet- soviel Kontakt zum Fördergurt (11) haben, daß sie in drehend-kehrende Bewegung versetzt wird, oder sie erhält Motor-Antrieb (394 a) . Abstreifer (391), Bürsten (392), Platten (394) und Hydraulikzylinder (393) sind an Gehängerahmen (295) , Tragmasten (387) und Rohrmasten (333) und an Silos (384) und an an speziellen Stellen zu errichtenden Stützen befestigt und an allen Tragkonstruktionen die Tragrollen (9) oder in gleitender Art, Fördergurte (11) tragen.

Figur 29 und 30 zeigen wie Netze (395) an jedem Gehängerahmen (295) befestigt sind um den Fördergurt (11) und das Untertrum (14) aufzunehmen, wenn die Gehängerahmen (295)für Wartung und Reparatur oder für Schutz vor Witterungseinflüssen außerhalb der Betriebszeiten (z.B. Nacht, Winter) auf engem Raum zusammengezogen werden. Das Netz (396) soll tiefer angebracht werden wenn die Betriebs-Abstände der Gehängerahmen (295) groß sind, z.B. drei bis vier Meter. Das gilt auch für die wahlweise angebautem Seile oder Bänder (395, 396). Ohne diese Maßnahmen würden Fördergurte (11) und Untertrum (14) an einzelnen Stellen ganz nach unten durchrutschen auf dem Boden oder über die aufgeschütteten Produkt-Halten schleifen und beschädigt werden und -abgesehen davon- auch sich ineinander verschlingen, wenn die Gehängerahmen (295) wieder in Betriebsstellung gefahren werden sollen.

Bei den oben genannten Witterungseinflüssen ist u.a.eine besondere Gefahr im Winter,durch Nebel,Nässe, Tauwetter und Frost : die Fördergurte (11) und die Untertrums (14) frieren an den Tragrollen (9), Untergurtrollen (12), Antriebstrommeln (297) und Umlenktrommeln (369) in oft erstaunlicher Wirkung und mit dicken Eisschichten fest. Fördergurte reißen, Motore schmoren durch, Getriebe und Kupplungen werden zerstört, ebenso die Antriebstriemen.

Die Förderanlage unter Dach oder in feste Gebäude zu fahren, ist da von großem Vorteil.

Stationäre Förderanlagen, die weiter als allgemein üblich, freitragend sein sollen, werden vorteilhaft in Rohrkonstruktion erstellt.

Es handelt sich dabei um Konstruktionen,deren Auflagen oder Abstützungen mehr als ca.zwölf Meter voneinander entfernt sind. Profile sollen nur ausnahmsweise und in speziellen Fällen zusätzlich verwendet werden.Erfindungsgemäß werden dementsprechend die nachstehend beschriebenen Tragkonstruktionen und Fördereinrichtungen hergestellt. Der Erfindung entsprechen auch die Kenntnisse und Erfahrungen, daß Schweißnähte Schwachstellen der Statik sind; deshalb sind hier nachstehend alle beschriebenen Verbindungen ohne tragende Schweißnähte herstellt.

Figuren 31 und 32 zeigen vorzugsweise in Rohr-Gitter-Konstruktionen (440) hergestellte Träger für Förderbänder.Sie sind aus Ringen (441) , Doppelringen (442) und Längsträgern (443)-,vorzugsweise aus Rohrengefertigt.Die Förderbänder mit Antriebstommel (297), Fördergurt (11), Umlenktrommel (369), Tragrollen (9) und Untergurtrollen (12) werden vom Antrieb (364) und vom Antriebsriemen (365) angetrieben und sie sind fest in den vorzugsweise Rohr-Gitter-Konstruktionen (440) befestigt. Antriebstrommeln (297) reichen so weit nach vorn und die Umlenktrommeln (369) reichen so weit nach hinten über die Rohr-Gitter-Konstruktionen (440) hinaus, daß eine Förderung durch viele dieser Konstruktionen (440) und damit über längere Strecken erfolgt.Die Konstruktionen (440) sind durch Kupplungen (444) vorzugweise mit Kardangelenk (444) beweglich, oder durch Gestänge (445) wahlweise oder gleichzeitig fest verbunden. Die Kupplungen (444) sind abklappbar oder abnehmbar. Soweit Kupplungen (444) während Förderns in Funktionsstellung bleiben, werden sie abgedeckt. Die Rohr-Gitter-Konstruktionen (440) sind etwa zwanzig bis dreißig Meter lang und einzeln oder mehr als zwei bis zehn zusammen in Betrieb. Durch die Kupplungen (444) ist es möglich, jeweils zwei und mehr, gleichzeitig seitlich wegzurollen um so eine Förderstrecke an einen anderen Platz und in eine andere Richtung zu verändern. Abstützungen (446) vorzugsweise klappbar, halten die Fördereinrichtungen fest,verhindern also das wegrollen.Die Antriebstrommel (297) fördert dann immer anf die Umlenktrommel (369) und auf den aufliegenden Fördergurt (11).

Figur 33 zeigt eine sechs-eckige Ausführung der Erfindung nach Figuren 31 und 32 . Der Vorteil : bleibt auf abfallendem Gelände besser stehen, kann trotzdem gerollt werden und Abstützungen (446) erhöhen zusätzlich die Standfestigkeit.

Figuren 34 und 35 zeigen Ringe (441)-vorzugsweise aus Rohr mit Längsträgern (443) auf denen Räder (447) mit Achsen (448) laufen, die an Halterungen (449) die Förderband-Längsträger (450) halten, an denen alle Teile der bei den Figuren 31 und 32 beschriebenen Fördereinrichtungen hängen. Die Rohr -Gitter-Konstruktionen sind etwa zehn bis dreißig Meter lang.

Figur 36 zeigt Innenringe (452) aus U- Profil mit einem hohen Schenkel (452a) und einem niedrigen Schenkel (452b). In den Spurrillen (452c) laufen die Räder (451) mit Achsen (448) und Halterungen (449), an denen ebenfalls die Förderband-Längsträger (450) hängen.Wenn die Abstützungen (446) entfernt oder weggeklappt worden sind, werden die Rohr-Gitter-Konstruktionen auch hier rollbar und damit leicht ortsveränderlich. Leitungen sind jeweils mit Steckern zu kuppeln und versorgen die Fördereinrichtungen, mit Strom, Schalt und Signal-Einrichtungen und mit Steuerungen in den allg. bekannten Ausführungen.

Bei den Ausführungen nach den Figuren 34,35, 36 bleiben die Fördereinrichtungen an den Förderband-Längsträgern (450) stets in der gleichen geraden Lage , auch während des Wegrollens.

Figur 37 und 38 : eine Rohr-Gitter-Konstruktion (440) in konischer Ausführung; das Vorder teil mit größerem Durchmesser legt beim Rollen einen größeren Weg zurück, kann die mit Kupplungen (444) verbundenen , anderen Rohr-Gitter-Konstruktionen (440) mitrollend , mitziehen und so die Produkte in Streifen oder Wällen abwerfen. Das Rollen wird vorzugsweise durch die Antriebsräder (454) mit vorzugsweise elektrischen Motoren bewirkt. Die Kupplungen (444) sind dabei abgedeckt. Antriebstrommeln (297) und Umlenktrommeln (369) sind stets so zentral aufeinander angeordnet, daß das Produkt von einem Fördergurt (11) zum anderen gelangt, auch bei Winkeländerungen der Rohr-Gitter-Konstruktionen (440) zueinander.

Figur 39 und 40 zeigen Tragkonstruktionen . Dabei werden Profile oder Rohre und deren Durchmesser und Wandstärken und die Abstände in Höhe und Länge, die Winkel der Diagonalen und die freitragenden Längen am Aufbauort nach Berechnungen oder Erfahrungen mit diesem System gewählt. Uberdachungen (456) aus Kunststoff werden mit in den Befestigungsplatten (225,241,269) gefaßt oder in an sich bekannter Weise angeklemmt oder angeschraubt. Überdachungen (456) aus Stahlblech,vorzugsweise gewellt und verzinkt, werden dabei als tragende Elemente in die Konstruktion einbezogen.

Figur 41 zeigt in Draufsicht eine Fördereinrichtung (518) mit dem Fördergurt (11). Die sich drehenden Teile haben bei den modernen Anlagen Dauerschmierung. Wartung ist also im Allgemeinen nicht erforderlich. Kontrollen sind aber dringend notwendig und dauernde Überwachung aller sich drehenden und bewegenden Teile ist notwendig, denn immer wieder springen die Einlegerollen aus ihren Stützen, Rollen klemmen wegen mechanischer Schäden , oder Partikel oder Brocken des Fördergutes verursachen Schäden, die in jeder weiteren Sekunde und Minute größer werden und die bis zur Zerstörung von vielen und wertvollen Teilen oder bis zur Zerstörung der ganzen Fördereinrichtung führen.

Bei einem Teil der Fördereinrichtungen wurden Antriebstrommeln bisher schon überwacht und auch der Synchronlauf von Fördergurt und Antriebstommel -abzüglich eines zulässigen Schlupfes von etwa zwei bis vier Prozent- wurde in Dauerkontrolle überprüft und teilweise an Meldegeräte angeschlossen.

Es fehlt die Überwachung aller sich drehenden und bewegenden Teile.Mit den bisher verwendeten Einrichtungen für Antriebstrommeln war der Aufwand dafür zu hoch.

Figur 42 zeigt einzelne Bauteile einer Fördereinrichtung und die kostengünstigem-auch nachträglich anzubringenden- Teile zur ständigen Überwachung und auch automatischer akustischer, optischer Meldung und Abschaltung.

Fördergurte (11) erzeugen beim Lauf über Tragrollen (9), über Untergurtrollen (12) und über Antriebstrommeln ( 297) und Umlenktrommeln (369) und beim nahen Vorbeigleiten an Tragkonstruktionen oder anderen Teilen der Fördereinrichtungen, elektro-statische Felder.

Hier sind vor den Tragrollen (9), in Laufrichtung des Fördergurtes (11), Aufnehmer (519), vorzugsweise aus Kupferdraht oder Kupferbleche angebracht, die durch Drähte (520) verbunden sind und die die elektro-statische Ladung durch einen Draht (520 a) , zur Kontroll-Tafel (521) leiten. Hier sind also drei Tragrollen (9) zusammengeschaltet.

Alle zur Entstehung oder Änderung oder Beendigung elektro-statischer Felder beitragenden Teile sind erfaßt und auf die nachfolgenden Übertragungs-und Signaleinrichtungen abgestimmt. Dementsprechend gibt die Leitung (520 a) starke, schwache, intermittierende oder keine Impulse zur Kontroll-Tafel (521( und dementsprechend schalten Lampen und Signale, auch optischer und akustischer Art und dementsprechend wird auch i m Notfall die Anlage mit Fördereinrichtungen und vor-und nachgeschalteten Maschinen geschaltet. Der Aufnehmer (519 a) ist nahe der Antriebstrommel (297) und nahe dem ablaufenden Unterrtum (14) des Fördergurtes (11) angeordnet und über den Draht (519 b) leitet er die elektro-statischen bzw. keine elektro-statischen Energien zur Kontroll-Tafel (521) Bei anti-statisch ausgerüsteten Fördergurten (11) werden Fördergurte und alle mit diesen in Berührung kommenden Teile, die elektro-statische Impulse -auch bis Null- bewirken sollen, mit leitenden Streifen,oder isolierenden Streifen oder Schichten versehen, daß die gewünschten elektrostatischen Effekte erzielt werden. Tragrollen (9) und die schon genannten drehenden Teile und die genannten feststehenden Teile werden gegenüber den Fördergurten und im Zusammenhang mit den Fördergurten so isoliert beschichtet oder leitend gemacht, daß die elektrostatischen Effekte erzielt werden.In einem weiteren Fall ist die Kunststoffscheibe (529) seitlich an der Tragrolle (9) befestigt, ebenso an anderen sich drehenden Teilen.

Die weiteren Tragrollen (9) haben je einen Aufnehmer(530a,b,c) die an je einen Draht (531a,b,c) angeschlossen sind:Einzelkontrolle. Bei großen und langen Fördereinrichtungen werden Kabelbäume mit sehr dünnen Drähten verwendet. Störungen werden dann mit Kabelmeßgeräten geortet. Der vorzugsweise berührungslose Kontaktgeber (523) ist an der Antriebstrommel (297) befestigt. Bei jeder Umdrehung -etwa jede Sekunde- gibt der Kontaktgeber (523) durch Veränderung des induktiven oder kapazitiven Energie-Zustandes über Aufnehmer (524) im Draht (524 a) einen Impuls zum Zeitrelais (517), das anfällt wenn die Impulszahl sich ändert, oder wenn die Impulse ausbleiben. Diese Impulse sollen auch magnetisch oder elektrisch aktiv durch Energiequellen, z.B.aus einer Taschenlampenbatterie,erfolgen und damit Schaltungen und/oder Signale auslösen. Alle Lampen sind vorzugsweise mit Zeitrelais (517) und/oder Schaltgeräten (526) und Signalgeräten (527) gekoppelt. Der Aufnehmer (525) ist innen hohl, bestehend vorzugsweise aus einem Kästchen oder aus einer Kugel aus Kupferblech, mit Drahtanschluß (525 a) außen und mit Drahtanschluß (525b) zum freien Raum innen. Dadurch wird die größtmögliche Energie-Differenz erfaßtund das so stark unterschiedliche Potential wird zur Lampe (522) und zu Schaltgeräten (526) und Signalgeräten (527) geleitet.

Um die Energie-Differenz, also die unterschiedlichen Potentiale noch stärker zur Wirkung zu bringen, um besser justieren und abgrenzen zu können, wann Impulse steuernde oder meldende Wirkungen erzielen sollen, werden Kondensatoren zwischen die unterschiedlichen Potentiale einzelner oder mehrerer Aufnehmer z.B. (525, 530 a,b,c )geschaltet. Um Fremd-Einflüsse zu vermeiden, werden elektrische Leitungen in bekannter Weise mit Abschirmungen umgeben und um elektro-statische Wirkungen durch Aufnehmer (525....) richtig erfassen zu können, werden die elektro-statischen Felder ebenfalls gegen Fremd-Einflüsse abgeschirmt; also auch doppelte Abschirmungen um Überlagerungen zu vermeiden.

Für die Abgabe von Signalen, für Schaltung und/oder Alarm werden wahlweise Ruhestrom-Kontakte gehalten, die bei Änderungen oder Ausfall der electro-statischen Energie, Fördereinrichtungen und damit zusammen-arbeitende Maschinen und Anlagen abschalten.

Wenn anti-statische Fördergurte und Fördereinrichtungen vorgeschrieben sind, die vorbeugend wirken, werden Fluidics, d.h. pneumatische Logiksteuerungen verwendet : Die Seitenansicht der Umlenktrommel (369a) zeigt dunkle erhöhte Felder und helle vertiefte Felder.

Ein aus nächster Entfernung auf die sich drehendenFelder gerichteter Luftstrahl wird ständig abwechselnd, im Rhythmus der Felder, gestaut und freigegeben. Im gleichen Rhythmus treffen Luftstöße ,Rückstöße auf pneumatische Ventile. Diese Stöße werden pneumatisch oder elektrisch oder in Kombination weitergeleitet. Bei Unregelmäßigkeiten werden die beschriebenen Schaltungen und Signale ausgelöst.

Genauso werden alle anderen sich drehenden oder bewegenden Teile kontrolliert. Wahlweise geben an diesen Teilen befestigte, elastische kleine "Fähnchen" pneumatische Stöße in ein Rohr, die im Impulse umgesetzt und weitergeleitet werden

Unter Förderanlagen gemäss der Erfindung werden Sektionen von Tragkonstruktionen und Fördereinrichtungen verstanden. Unter Tragkonstruktionen werden die funktionell erforderlichen Teile verstanden,welche die Fördereinrichtung tragen.

Figur(43)und (44) zeigen wie vorzugsweise in einem Rohrmast die zu fördernden Produnkte an verschiedenen Stellen abgeworfen werden können, aber immer zu den Förderanlagen geleitet werden oder dort hinrutschen können.

Figur(45)und (46) zeigen wie dieser Effekt über Rutschen oder Vibrationsrinnen auf die Fördereinrichtung aufgegeben , die am Drehkranz (343) befestigt sind, und der Trog (340) mit den Auslauf (344) über der Rinne (337) das Fördergut auf die Fördereinrichtungen unabhängig von der Richtung des Tragseiles (291) und unabhängig von der Zuführung in der Steilförderung (339) aufgibt, oder der drehbare Auslaufkopf (497) des Steilförderes (339) sich in Richtung des Tragseiles (291) mitdreht , und das Fördergut aufgibt, oder die Steilförderereinrichtung (339) in den Trog (334,a) fördert und von jeder Stelle des nach allen Seiten abfallenden Troges das Fördergut zur tiefsten Stelle (344) auf die Fördereinrichtung über die Rutsche (329) rutscht.

Die Figuren (47) bis(51) zeigen dass an dem oberen Punkt des drehbaren Pylon (463) mittels der Hauptspanndrahtseile (468,469) und der Drahtseile (470) ein oder mehrere Auslegen (464, 465) mit einer oder mehreren Fördereinrichtungen (466, 467) angehängt sind, und die Drahtseile (470) in die Löcher (471) der Scheiben (418) eingreifen, und an den Scheiben (418) die äusseren Rohre (417,a) und die inneren Rohre (417) angeschweisst sind, und die tragenden Konstruktionsrohre der Ausleger (464, 465) von beiden Seiten gegen die Scheiben (418) eingesteckt sind und durch Beanspruchung der Ausleger (464, 465) nur auf Zug, keine Befestigungen der eingesteckten Rohre erforderlich sind, und die Steilfördereinrichtung (339) mit dem drehbaren Pylon (463) verbunden ist und über die Fördereinrichtungen (326) und über die Tröge (476) mit Schneckenförderern das Produkt zugeführt wird und gegebenenfalls die Fördereinrichtungen (466, 467) durch hydraulische Stempel (487) an dem Pylon (463) angehoben oder gesenkt werden und dadurch eine Übergabe des Produktes an dieser Stelle erfolgt, und die Förderung über beide Ausleger (464, 465) über die ganze Länge erfolgt.

Wenn - vorzugsweise auf Baustellen-nicht gebohrt oder geschweißt werden darf, oder wenn Teile demontierbar bleiben sollen, werden Stahlklemmen oder vorzugsweise Stahlbänder um die zu verbindenden Teile gelegt und vorzugsweise mit Schrauben werden diese Klemmen in bekannter Weise zusammengezogen.

Wenn diese Klemm-Verbindungen nicht ausreichend sicher sind, weil nur kraftschlüssig wirkend, werden Bandagen aus elastischen Materialien, vorzugsweise mit Metallklebern ausgerüstet, Um auch zusätzlich formschlüssige Verbindungen herzustellen, werden scharfkantige Hartmetallkörner oder Hartmetall-Formteile zwischen die zu verbindenden Teile gelegt oder dieses Hartmetall wird mit Bandagen und Pflastern zusammen zwischen die zu verbindenden Teile gelegt oder fest um diese Teile gespannt.

Ein Anwendungsfall als Beispiel: Die Winden-(302) werden in Ihrer Lage verändert und auch höher und tiefer gestellt an den Trägern.

## Ansprüche

1. Förderanlagen aus Sektionen von Tragkonstruktionen und Fördereinrichtungen zur optimalen und einfachen Umstellung des Förderortes, des Förderweges, zur Änderung der Stützweiten bei hoher Stabilität, zur konstruktiven Anpassung an Veränderungen der zu transportierenden Stoffe und Güter aller ARt unter Verwendung standardisierter Einzelelemente als Bausteine, dadurch gekennzeichnet, dass an Masten (289, 292) mit Seilabspannung, oder an einem Gebäude oder im Boden ein Drahtseil (291) als Tragseil mit einer Seilbefestigung (290) verankert ist, und auf diesem die Spurrollen (293) mit den Wellen (294) laufen, und an denen die Gehängerahmen (295), die Fördereinrichtungen mit Tragrollen (9), mit den Achsen (10) und mit dem Fördergurt (11),und die Untergurtrollen (12) mit den Achsen (13) und mit den Untertrümern (14) des Fördergurtes hängen, und der Antrieb durch einen Trommelmotor (296) oder über die Antriebstrommel (297) erfolgt, und der Fördergurt über die Leitrollen (299,300) auf der Untergurtrolle (12) geführt ist, und eine Winde (302) die Zugseile mit oberem und unterem Strang (303,304) über die Spurscheibe (305) anzieht und das untere Zugseil mit dem oberen Strang (311) an den Befestigungspunkten (306,a) mit allen Gehängerahmen am- unteren Rand verbunden ist, und durch diese Kombination von Fördereinrichtung und Tragseil unterschiedliche Förderlängen einstellbar sind unter Vermeidung aufwendiger Stahlkonstruktionen.

2.Förderanlage in Abänderung von Anspruch 1 ,dadurch gekennzeichnet,dass das Tragseil (291) sich zwischen zwei Aufhängepunkten, vorzugsweise zwischen Stahlträgern mit Stützen (374) und Masten (288), befindet, und die daran befestigte Gehängerahmen (295) mit zwei oder mehreren Spurrollen (293) in sich nach unten verjüngender Trapezform ausgebildet ist zur Erhöhung der Stabilität des Tragseiles und der Gehängerahmen in Längsrichtung und zur Aufnahme mehrerer Tragrollen (9) und Untergurtrollen (12), und der Gehängerahmen (295) durch die herausnehmbare Welle (294) austauschbar ist, und dieser durch den Steg (375) verstärkt ist, und grosse Spurkränze (378) das Abspringen von zwei oder mehreren Tragseilen (291) verhindern und ausserdem Regenabweiser (379) und Leitbleche (380) angeordnet sind, gegebenenfalls an den Hängerahmen (295) Netze (395) befestigt sind zur Aufnahme des Fördergurtes (11) und des Untertrums (14) beim Zusammenschieben des Gehängerahmens (295) für Wartungszwecke, oder in Gebäude als Wetterschutz.

3.Förderanlage in Abänderung der Ansprüche 1 und 2, dadurch gekennzeichnet, dass auf dem Befestigungspunkt (292) ein oder mehrere Tragseile (291) schwenkbar oder am Drehkranz (334) gelagert sind, und das Tragseil (291) an seinem äusseren Ende ein Gegengewicht zur Spannung des Tragseiles trägt, das sich vorzugsweise auf einem oder mehreren Fahrwagen befindet, der sich auf einer kurvenförmigen, vorzugsweise einer kreisförmigen Strecke bis zu 360° bewegt, oder das Tragseil (291) an einem der beiden Befestigungspunkten auf einer Winde . befestigt ist, und das Tragseil zwischen den beiden Befestigungspunkten fest oder einstellbar eine steigende oder fallende Neigung aufweist, oder beide Befestigungspunkte sich auf annähernd gleicher Höhe befinden, vorzugsweise die Neigung des Tragseiles 5° bis 10° beträgt zur Einsparung an Energie bei der Förderung, und die Fördereinrichtung im Gehängerahmen (295) an Spurrollen (363) auf dem Tragseil (291) von Winden (302,308) in beiden Richtungen gezogen wird, oder statt der oberen Winde (302) und anstelle der Spurrollen (293) sich das Laufrad (361) und das Zahnrad (363) und die Drahtseiltrommel (367) befinden, und die Gehängerahmen (295) dadurch sich selbstfahrend mit dem Zahnrad (363) auf Zahnschienen (360) , oder mit dem Laufrad (361) auf Schienen (359) oder Tragseilen (291) bewegen, und die so angetriebenen Gehängerahmen (297) zur Abstützung des Gegenmoments mit einem anderen Gehängerahmen (295) durch diagonale Verstrebungen (368) verbunden sind, und sich in den Gehängerahmen (295) mehrere Fördereinrichtungen verschiedener Längen über-und/ oder nebeneinander befinden zum Abwerfen des Fördergutes an verschiedenen Stellen, oder auf den Fördereinrichtungen an definierten Stellen mittels heb- und senkbaren Abstreifvorrichtungen das Fördergut abgestreift wird, und das Fördergut ausserhalb oder innerhalb des inneren Befestigungspunktes (292) hochgefördert und über Rutschen oder Vibrationsrinnen auf die Fördereinrichtung aufgegeben wird, die am Drehkranz (343) befestigt sind, und der Trog (340) mit dem Auslauf (344) über der Rinne (337) das Fördergut auf die Fördereinrichtungen unabhängig von der Richtung des Tragseiles (291) und unabhängig von der Zuführung in der Steilförderung (339) aufgibt, oder der drehbare Auslaufkopf (497) des Steilförderers (339) sich in Richtung des Tragseiles (291) mitdreht , und das Fördergut aufgibt, oder die Steilförderereinrichtung (339) in den Trog (343,a) fördert und von jeder Stelle des nach allen Seiten abfallenden Troges das Fördergut zur tiefsten Stelle (344) auf die Fördereinrichtung über die Rutsche (329) rutscht.

4.Förderanlage in Abänderung der Ansprüche 1 bis 3, dadurch gekennzeichnet, dass an dem oberen Punkt des drehbaren Pylon (463) mittels der Hauptspanndrahtseile (468,469) und der Drahtseile (470) ein oder mehrere Ausleger (464, 465) mit einer oder mehreren Fördereinrichtungen (466, 467) angehängt sind, und die Drahtseile (470) in die Löcher (471) der Scheiben (418) eingreifen, und an den Scheiben (418) die äusseren Rohre (417,a) und die inneren Rohre (417) angeschweisst sind, und die tragenden Konstruktionsrohre der Ausleger (464, 465) von beiden Seiten gegen die Scheiben (418) eingesteckt sind und durch Beanspruchung der Ausleger (464, 465) nur auf Zug, keine Befestigungen der eingesteckten Rohre erforderlich sind, und die Steilfördereinrichtung (339) mit dem drehbaren Pylon (463) verbunden ist und über die Fördereinrichtungen (326) und über die Tröge (476) mit Schneckenförderern das Produkt zugeführt wird und gegebenenfalls die Fördereinrichtungen (466, 467) durch hydraulische Stempel (487) an dem Pylon (463) angehoben oder gesenkt werden und dadurch eine Übergabe des Produktes an dieser Stelle erfolgt, und die Förderung über beide Ausleger (464, 465) über die ganze Länge erfolgt.

5. Förderanlage nach den Ansprüchen 1 bis 4, dadurch gekennzeichnet, dass zwei Tragrollen (9) eine Mulde bilden und in dieser den Fördergurt (11) tragen und die Tragrollen (9) durch an beiden Seiten befindliche Hebeorgane, insbesondere durch Hydraulikstempel (390),in eine waagerechte oder schräge Lage gebracht sind und Abstreifer (391) und/ oder Bürsten (392) , vorzugsweise diagonal, zur Laufrichtung des Fördergurtes (11) auf diesen geschwenkt oder abgesenkt sind zum Abstreifen des Fördergutes an bestimmten Stellen und sich gegebenenfalls unter dem Fördergurt (11) eine heb- und senkbare Trageplattform (393) an den Stellen befindet, an denen das Fördergut abgestreift wird.

6. Förderanlage nach den Ansprüchen 1 bis 5, dadurch gekennzeichnet, zeichnet, dass die Fördereinrichtungen in runder oder eckiger Rohr-Gitter-Konstruktion (440) befestigt sind, und die Antriebstrommeln (297) nach vorn überstehen, und die Umlenktrommeln (369) nach hinten überstehen, und eine bestimmte Anzahl von Rohr-Gitter- Konstruktionen (440) durch Kupplungen (444), vorzugsweise mit Kardangelenk, beweglich oder durch Gestänge (445) fest verbunden sind, und Abstützungen (446) unbeabsichtigtes Wegrollen verhindern, und das Fördergut durch die bestimmte Anzahl von Rohr- Gitter- Konstruktionen (440) durchgefördert wird, oder die Fördereinrichtungen an Längsträgern (450) befestigt sind und an den über die Rohr-Gitter- Konstruktionen (440) vorn und hinten hinausragenden Halterungen (449) über die Achsen (448) an den Rädern (447) hängen, und die Räder (451) in einem ungleichschenkligem U- Profil (452) frei laufend beweglich sind, und die U- Profile (452) in den Rohr- Gitter- Konstruktionen (440) in definierten Abständen befestigt sind, und durch die Konstruktion die Fördereinrichtungen in ihrer Funktionslage bleiben, auch, wenn die Rohr- Gitter- Konstruktion (440) einzeln, oder mehrere hintereinander seitlich weggerollt werden, und die in konischer Form ausgeführte, erste Rohr-Gitter- Konstruktion (440) mit Antriebsrädern (454) setlich wegrollen, und die anderen, zylindrischen Rohr- Gitter- Konstruktionen (440) ebenfalls seitlich wegrollen.

7. Förderanlage nach den Ansprüchen 1 bis 6, dadurch gekennzeichnet, dass zwischen den Fördergurten (11) und Antriebstrommeln (297) und Umlenktrommeln (369) elektrostatische Felder im Betriebszustand laufend gemessen, und die gegebenenfalls auftretenden Veränderungen der Feldstärken, deren Potential gegebenenfalls durch einen Hohlkörper (525) verstärkt wird, laufend ermittelt werden und bei zu geringen elektrostatischen Feldern durch Kunststoffscheiben (529) oder aufgespritzte Kunststoffstreifen (528), oder auf den Fördergurten aufgebrachte isolierende oder leitende Streifen das elektrostatische Feld verstärkt wird und bei im Verhältnis zur Fördergurtgeschwindigkeit und sich langsamer oder nicht mehr drehenden Tragrollen, Untergurtrollen, Umlenkrollen, oder sich rascher drehender Antriebstrommel (297) eine optische oder akustische Anzeige erfolgt,und die Förderanlage abgeschaltet wird, oder über eine elektrische oder magnetische Impulsgabe an der Antriebstrommel (297), oder Umlenktrommel (369), oder an anderen, sich drehenden Teilen eine Kontrolle der Drehfunktion und/ oder der Drehzahl erfolgt.

8. Anwendung der Förderanlage nach den Ansprüchen 1 bis 7, dadurch gekennzeichnet, zeichnet, dass durch eine veränderlich geneigte, eingestellte Stellung der Antriebstrommel (297) und der Umlenktrommel (369) und der Tragrollen (9) gleichzeitig ein Transport und eine Trennung des Fördergutes nach seiner Form oder seinem spezifischen Gewicht dadurch erfolgt, dass auf dem Fördergurt die rundlichen oder die spezifisch schwereren Partikel zuerst und danach die eckigen oder die leichteren Partikel abfallen und dadurch in Fraktionen getrennt sind, und gegebenenfalls der Transport und der Trenneffekt durch aufgelagerte Schwingungsimpulse in Förderrichtung, vorzugsweise auf Teilstrecken, verstärkt wird.

9. Förderlage nach den Ansprüchen 1 bis 7, dadurch gekennzeichnet, dass die Bandagen aus zwei dünnen Bandagen oder aus Pflaster und Bandagen bestehen, und sich zwischen diesen Teilen Hartmetallkörner eingebunden befinden, die durch das Einpressen der Metallkörner in Metallteile deren Formschlüssigkeit bewirken.

Figur 2

EP 0 375 667 A2

Figur 3

Figur 4

Figur 5

Figur 6

Figur 7

Figur 8

Figur 9

Figur 10

Figur 11

Figur 12

Figur 13

Figur 14

Figur 15

Figur 16

Figur 17

Figur 19

Figur 21

Figur 18

Figur 20

Figur 22

Figur 23

Figur 24

Figur 25

Figur 26

Figur 27

Figur 28

Figur 96a

Figur 29

Figur 30

Figur 31

Figur 32

Figur 33

Figur 36

Figur 34

Figur 35

Figur 37

Figur 38

Figur 39

Figur 40

Figur 41

Figur 42

Figur 43

333 340
338 295 11 291
294

Figur 44

338
341
342
343
340

497

344

294 295 11 291

337

339

Figur 45

333
338
340  294  295  11  291

Figur 46

343a

344  329'

338
334
331

294  295  11  295  9  291  295

345
346  347  348  347
302  14  345

339

Figur 47

Figur 49

Figur 48

Figur 51

Figur 50

EP 0 375 667 A2